(19) **Europäisches Patentamt**

**European Patent Office**

**Office européen des brevets**

(11) **EP 0 208 156 B2**

(12) **NEUE EUROPÄISCHE PATENTSCHRIFT**

(45) Veröffentlichungstag und Bekanntmachung des Hinweises auf die Entscheidung über den Einspruch:
**28.05.1997 Patentblatt 1997/22**

(51) Int. Cl.$^6$: **B01D 53/34**, F23J 15/00

(45) Hinweis auf die Patenterteilung:
**20.05.1992 Patentblatt 1992/21**

(21) Anmeldenummer: **86107913.5**

(22) Anmeldetag: **10.06.1986**

(54) **Verfahren und Anlage zur weitgehenden Restentfernung von Schadstoffen aus Abgasen von Verbrennungsanlagen**

Process and apparatus for the final elimination of harmful substances contained in waste gases of incinerators

Procédé et dispositif pour l'élimination finale de substances nocives contenues dans les gaz de rejet d'incinérateurs

(84) Benannte Vertragsstaaten:
**AT BE CH FR GB IT LI LU NL SE**

(30) Priorität: **11.06.1985 DE 3520885**

(43) Veröffentlichungstag der Anmeldung:
**14.01.1987 Patentblatt 1987/03**

(73) Patentinhaber: **von Beckerath, Kurt, Dr.rer.nat.,Dipl.-Chem.**
**83646 Bad Tölz (DE)**

(72) Erfinder:
• **von Beckerath, Kurt, Dr.rer.nat.Dipl.-Chem.**
**D-8170 Bad Tölz (DE)**

• **Luxenburg, Peter Otto Bruno, Dr. Dipl.-Chem.**
**D-8000 München 81 (DE)**

(74) Vertreter: **Ruschke, Olaf, Dipl.-Ing. et al**
**Patentanwalt**
**Franziskanerstrasse 38**
**81669 München (DE)**

(56) Entgegenhaltungen:
EP-A- 0 150 694     EP-A- 0 168 533
DE-A- 3 303 475     DE-A- 3 320 466
DE-A- 3 329 823     DE-C- 864 862
FR-A- 2 547 210     US-A- 3 315 443

**Beschreibung**

Die Erfindung betrifft ein Verfahren und eine Anlage zur möglichst weitgehenden Restentfernung von Schadstoffen aus Abgasen (Rauchgasen) von Müll- und Sondermüllverbrennungsanlagen. Diese Schadstoffe liegen in Gas-, Aerosol- und/oder Staubform vor und können je nach dem sehr heterogenen Verbrennungsgut in nennenswertem Umfang mit dem Rauchgas ausgetragen werden.

In der DE-A 33 29 823 wird ein Verfahren zum Entzug von Schadstoffen aus heißen Rauchgasen durch fraktionierte Abkühlung beschrieben. Die Rauchgase entstehen bei der Verbrennung fossiler Brennstoffe und werden ohne vorherige Wäsche fraktioniert unter den Taupunkt der jeweils abzuscheidenden Säure abgekühlt. Vor dem Eintritt in die Reinigungsanlage wird der Feuchtigkeitsgehalt des heißen Rauchgases auf einen festen Wert weit unterhalb der Wasserdampfsättigung eingestellt. Bei der fraktionierten Kühlung sollen relativ konzentrierte Säuren gewonnen werden, ein Restschadstoffgehalt wird toleriert.

Bei dem aus der FR-A 25 47 210 bekannten Rauchgasreinigungsverfahren werden saure Schadgase wie HCl und Schwermetalle in einer kombinierten Kondensations/Waschstufe abgeschieden und das anfallende saure Kondensat dient zum Lösen der Schwermetallgehalte aus den Flugstäuben. Bei dieser Prozedur entsteht Wasserdampf, mit dem Restschadstoffe aus dem Wäscher ausgetragen werden. Das Restgas wird erst anschließend einer alkalischen Naßwäsche zugeführt. Eine Kondensationskühlung hinter der Naßwäsche ist nicht vorgesehen. Der Quecksilberaustrag aus der Kondensations/Waschstufe ist erheblich.

Die Müllverbrennung als Methode zur ökonomischen Abfallverwertung und -beseitigung ist im Grundsatz unbestritten. Für die Umweltfreundlichkeit dieser thermischen Abfallbehandlung ist die Steuerung und Kontrolle der mit den Verbrennungsabgasen verbundenen Emissionen von entscheidender Bedeutung, da auch sehr geringe Mengen aufgrund des hohen Mengen- bzw. Massedurchsatzes belastend wirken können. Die Leistungsfähigkeit der bisherigen Verfahren und Anlagen wurde weitgehend an den vom Gesetzgeber vorgegebenen Konzentrationsgrenzwerten orientiert (TA Luft, 1974). Die Technische Anleitung Luft (1974) bezieht die jeweiligen Grenzwerte auf ein feuchtes Abgas mit 11 % Sauerstoff ($O_2$) und beläßt es somit beim Betreiber einer Anlage, etwa auftretende höhere Schadstoffkonzentrationen durch eine Art "Verdünnungsprinzip" noch immer unterhalb zulässiger Grenzwerte zu halten, obwohl in der Summenbilanz erhebliche Mengen an Schadstoffen emittiert werden. Bisher unberücksichtigt blieb die Tatsache, daß in Rauchgasen aus Verbrennungsanlagen enthaltene Schadstoffe, die unter Normalbedingungen Feststoffe darstellen, als Schweb- oder Staubaggregate mitgeführt werden; derjenige Anteil der Schadstoffe, der sich aus dem Dampfanteil (vgl. Dampfdruckkurve) ergibt, ist bisher nicht berücksichtigt worden. Es ist aber beispielsweise allgemein bekannt, daß das Schwermetall Quecksilber anteilig mit Wasserdampf destilliert werden kann, wobei der Partialdampfdruck des Quecksilbers die Menge des über die dampfförmige Phase übergehenden Metalls bestimmt. Ähnlich liegen die Verhältnisse bei zahlreichen organischen Schadstoffverbindungen, die beispielweise durch Wasserdampfdestillation gasifiziert werden können. Wegen des hohen Massedurchsatzes muß deshalb auch bei sehr wenig flüchtigen Verbindungen mit einem nicht unbeachtlichen Verflüchtigungsgrad gerechnet werden.

Mit den bisher verwendeten Abgasreinigungssystemen, die in der Regel Elektrofilter in Verbindung mit Naßwäschern, Zyklonen und alkalischen Nachbehandlungen umfaßten, konnten zwar die derzeit gesetzten Grenzwerte sowohl bezüglich der Schadgasanteile wie CO, NO, $NO_2$ und $SO_2$ als auch der Anteile an Schwermetallstäuben, wie Pb, Zn, Cu, Cr, Ni, Cd, Hg und Fe, eingehalten werden. Ob dies bei zukünftigen schärferen Regelunge wie sie im Novellierungsentwurf für die TA Luft (II) vorgesehen sind, gleichfalls zutrifft, muß zumindest in Frage gestellt werden.

Die bisher angewendeten Verfahren der Rauchgasreinigung sind an besondere Situationen schlecht anpaßbar, was bei Inkrafttreten der Novellierung TA Luft mit zu erwartender Verschärfung der zulässigen Belastungsgrenzen im schlimmsten Fall sogar zur Außerbetriebsetzung einer Müllverbrennungsanlage führen würde. Aber auch ohne vom Gesetzgeber vorgegebene Grenzwerte sollte die Emission von Schadstoffen im Interesse der Öffentlichkeit absolut, d.h. unabhängig von Verdünnungs- und Verdampfungseffekten, so niedrig wie möglich gehalten werden.

Die Abgase von Verbrennungsanlagen enthalten Wasserdampf; das mit diesen Abgasen transportierte System ist ziemlich komplex aufgebaut, da die einzelnen Komponenten tatsächlich sowohl in Gas aber auch in Aerosol- und Staubform vorliegen können. Die bisherigen Methoden zur Entfernung von Schwermetallgehalten aus den Abgasen beruhen vereinfacht auf der Annahme, daß diese Gehalte entweder selbst staubförmig sind oder sich aber vorwiegend an mitgeführten Staubteilchen anlagern und deshalb über deren Messung und Aussonderung, z.B. die Elektrofilter, aus dem Abgas abgetrennt werden können. Mittlerweile hat sich jedoch die Erkenntnis durchgesetzt, daß Schwermetalle auch in Form von flüchtigen Verbindungen oder gebunden in Aerosolen mit dem wasserdampfhaltigen Abgas ausgetragen werden. Da die Abregnungsfläche um den Kamin einer Verbrennungsanlage konstant und unveränderlich bleibt, kommt es im Laufe der Zeit zu notwendigerweise ansteigenen Aufkonzentrierungen nicht nur in der Umgebungsluft bei Windstille, sondern auch im Boden. Die Folgen sind augenscheinlich.

Es konnte festgestellt werden, daß aus dem Kamin von Sondermüllverbrennungsanlagen noch meßbare Mengen an Schwermetallen emittiert werden. Bei Anlagen, die über einen Naßwäscher verfügen, ist dabei überraschenderweise festgestellt worden, daß sich entgegen allen Erwartungen für bestimmte Schwermetalle zwar der Anteil der staubförmigen Schwermetallkomponenten meistens deutlich herabsetzen läßt (ausgenommen Queckilber und in gerin-

2

gerem Ausmaße auch Nickel und Chrom); dagegen bei Schwermetallen wie Blei, Cadmium, Chrom und Nickel derjenige Anteil der Schwermetalle in Gas-und/oder Aerosolform ansteigt, so daß mit dem wasserdampfhaltigen Restwaschgas weiterhin Schwermetallbelastungen ausgetragen werden.

Folgende Tabelle I faßt die Situation an einer Sondermüllverbrennungsanlage mit Naßwäsche zusammen. Der Aufkonzentrierung der Schwermetallgehalte ist bisher kaum Aufmerksamkeit geschenkt worden.

Tabelle I

| Rauchgaskomponente | Massenstrom (g/h) vor dem Wäscher | | | Massenstrom nach dem Wäscher | | |
|---|---|---|---|---|---|---|
| | an Staub gebunden (1) | gasförmig ungebunden (2) | Summe aus (1) u. (2) | an Staub gebunden (1) | gasförmig ungebunden (2) | Summe aus (1) u. (2) |
| Gesamtstaub | 1oo.ooo | - | 1oo.ooo | 7.535,o | - | 7.535,o |
| Blei | 3.o75,6 | 1o,4 | 3.o85,6 | 347,o | 37,4 | 385,o |
| Cadmium | 98,6 | 11,7 | 11o,3 | 9,6 | 12,6 | 22,2 |
| Chrom | 149,4 | 178,1 | 327,5 | 51,7 | 266,7 | 318,4 |
| Nickel | 1o8,2 | 537,7 | 646,3 | 95,6 | 526,9 | 622,4 |
| Quecksilber | 4,3 | 298,4 | 3o2,7 | 1o,o | 131,6 | 141,2 |
| Fluorid (F⁻) | - | 9.o59,2 | 9.o59,2 | - | 13o,3 | - |
| Chlorid (Cl⁻) | - | 99.839,3 | 99.839,3 | - | 12.954,o | 12.954,o |
| Sauerstoff in % | | 9,4 | | | 12,3 | |
| Kohlendioxid ($CO_2$) in % | | 8,3 | | | 4,9 | |
| Schwefeldioxid ($mg/Nm^3$) | | nicht gemessen | | | o,17 | |
| Wassergehalt ($kg/Nm^3$) | | o,o22 | | | o,2o6 * | |
| Abgastemperatur (°C) | | 268,1 | | | 92,3 * | |
| Abgas-Volumenstrom ($Nm^3/h$) | | 233,o67 | | | 219 869 * | |

Fußnoten zu Tab. I :

* Zusatz von Heißluft zur Wiederaufheizung des Gasstromes nach dem Wäscher

Die Messungen erfolgten an einer Sonderabfallverbrennungsanlage, bei der hinter einem Elektrofilter ein zweistufiger, mit Natronlauge betriebener Venturiwäscher mit Tröpfchenabscheider angeordnet war. Die Messungen erstreckten sich über 1 Woche, wobei im einzelnen 16 Messungen vorgenommen wurden. Die Werte stellen die Mittelwerte dieser 16 Messungen dar. Sämtliche Werte wurden auf einen durchschnittlichen Massenstrom von 1oo.ooo g/h Gesamtstaub vor dem Wäscher und nach dem Elektrofilter umgerechnet, um die Vergleichbarkeit herzustellen.

Die praktisch gefundenen Resultate bestätigen die vorstehende Aussage. Es besteht somit ein dringlicher Bedarf an einem wesentlich flexibler als bisher durchführbaren Verfahren, mit dem die Restmengen von Schadstoffen in Abgasen, sowohl organischer als auch anorganischer Natur und insgesamt einer Verbrennung mit sehr stark schwankenden Zusammensetzungen des Brenngutes, entfernt werden können.

Insbesondere ergibt sich ein besonders dringlicher Bedarf an einem Verfahren, mit dem gerade die in sehr niedrigen Konzentrationen in Rauchgasen und Waschrestgasen auftretenden Gehalte an gesundheitsschädlichen organischen Verbindungen und speziell an polyhalogenierten (z.B. polychlorierten) aromatischen Kohlenwasserstoffen (Dioxine, Benzofurane und dergl.), aber auch die Gehalte an Schwermetallen und Schwermetallverbindungen, wie sie beispielsweise in Tab. I genannt sind, insbesondere Verbindungen des Quecksilbers, Nickels, Bleis, Cadmiums, Chroms und dergl., gleich in welcher Form diese Metalle bei der Müllverbrennung in die Rauchgase und in die Waschgase bzw. Behandlungsgase des Naß-, Halbtrocken- und Trockenverfahrens gelangen bzw. in diesen vorliegen, auf sichere und reproduzierbare Weise entsorgt werden können, so daß eine nicht mehr steuerbare und beherrschbare Verunreinigung der Luft auch im Umgebungsbereich einer Müllverbrennungsanlage mit einiger Verläßlichkeit ausgeschlossen werden kann.

Die Müllverbrennungsanlagen, die sich teilweise unmittelbar in der Umgebung von Wohngebieten befinden, werden zur Zeit insbesondere nach dem sogenannten Trocken- bzw. Halbtrockenverfahren bezüglich der Rauchgasbehandlung betrieben.

Beim Naßverfahren werden die Schadstoffe mit alkalischen Lösungen (Alkalihydroxide, Erdalkalihydroxide, insbesondere Natronlauge oder Kalkmilch) umgesetzt und in Form von Salzlösungen oder Dünnschlämmen ausgeschleust.

Beim halbtrockenen Verfahren werden die Rauchgase mit im allgemeinen alkalischen Lösungen oder Suspensionen (gelöschtem Kalk, Kalkstein, Ammoniak, Natriumhydroxid) in Sprühtrocknern behandelt. Beim Trockenverfahren werden die Rauchgase im Gegenstrombetrieb mit festen alkalischen Produkten (Kalk, Kalkstein usw.) in Kontakt gebracht und im allgemeinen mehrmals im Kreislauf geführte Reaktionsprodukte erhalten. Diese Reaktionsprodukte werden dann kontinuierlich aus dem Kreislauf als Trockenprodukte ausgeschleust.

Die Abgase, die hinter den Abgasreinigern anfallen, sind aufgrund der unterschiedlichen Verfahren zwei Typen zuzuordnen:

1) Abgase aus Naßwäschen und/oder Quenschen, die zumindest in der letzten Stufe alkalisch gefahren werden, um saure Bestandteile zu neutralisieren und auszuwaschen. Die Abgase weisen nach Verlassen des Naßwäschers meistens Temperaturen unter 1oo°C auf (z.B. 7o°C) und sind mit Wasserdampf gesättigt. Je nach Wirkungsgrad nachgeschalteter Tröpfchenabscheider enthalten diese Abgase neben mitgerissenen Wassertröpfchen noch Aerosole und/oder gasförmige organische und anorganische Schadstoffe.

2) Abgase aus den Trocken- bzw. Halbtrockenverfahren. Sie werden nach der Behandlung mit Alkalien einer Entstaubung durch Zyklone, Elektrofilter oder Gewebefilter zugeführt und weisen in der Regel Temperatur um ca. 2oo°C auf. Sie enthalten Reststäube und Aerosole oder Gase der unterschiedlichsten Zusammensetzung organischer und anorganischer Natur sowie Wasserdampf.

Beim Quasitrocken- und Trockenverfahren entstehen durch das Einblasen von Kalk in das Rauchgas ziemlich hohe Filterstaubmengen, die ungefähr das Zweifache der Staubmengen beim Naßverfahren ausmachen und mit Schwermetallen und anderen an den Staubteilchen absorbierten Müllverbrennungsprodukten angereichert sind. Deswegen sind an die Entstaubung besonders hohe Leistungsanforderungen zu stellen. In der Praxis werden daher statt der üblicherweise verwendeten Elektrofilter Gewebefilter eingesetzt, die jedoch nur dann zufriedenstellend und sicher arbeiten, wenn der Säuretaupunkt von ca. 13o-14o°C nicht unterschritten wird und Partikelgeschosse vermieden werden. Bei Unterschreiten dieses Säuretaupunktes würde es zum Verkleben des Gewebenetzes und außerdem zu erheblichen Korrosionsproblemen kommen. Bei 13o°-14o°C gelingt aber die Bindung des der Gefahrenklasse I zugeordneten Quecksilbers höchstens teilweise, so daß Emissionswerte von o,2 mg/Nm$^3$ trotz gezielter Verdünnungen nicht eingehalten werden können.
Für andere Schwermetalle der Gefahrenklasse I wie Pb, Cr, Cd, Ni, Te, As, Be, Se, Tl und V ergeben sich ähnliche Probleme, wenngleich je nach Müllgutbelastung graduelle Unterschiede bestehen mögen. Auf jeden Fall nimmt bei allen Schwermetallverbindungen mit steigender Temperatur die Sättigungskonzentration zu, so daß eine höhere Konzentrationsbelastung der Gasphase stattfindet.

Bei einer unter Zufeuerung von Klärschlamm gefahrenen Müllverbrennung sind die Emissionen an unverbrannten organischen Kohlenstoffverbindungen und , je nach der Schwermetallbelastung des Klärschlamms, die Schwermetallgehalte erhöht, vgl. Müll und Abfall, 1984, loc. cit. .

Es ist bekannt, daß heteroatomhaltige Kohlenwasserstoffe und insbesondere die thermisch schwer zersetzbaren Organochlorverbindungen bei Müllverbrennungsanlagen auftreten und selbst bei Temperaturen bis zu 1.2oo°C nur unvollständig verbrannt werden. Die Sedimatanalysen von Sondermüllverbrennungsanlagen zeigten keine nennenswerten Konzentrationen an PCB- und HCH-Verbindungen, s. K.v.Beckerat "Beschaffenheit flüssiger Abgänge bei der Rauchgaswäsche", 3. Mülltechnisches Seminar, Abgasreinigung und Gewässerschutz bei der thermischen Abfallbehandlung, Nr. 26, Berichte aus Wassergütewirtschaft und Gesundsheitsingenieurwesen, Institut für Bauingenieurwesen V, TU München, 1980,S. 72-89. Nach Chem. Ind. XXXVI, Nov. 1984, S. 7o1, können Dioxine als unerwünschte Nebenprodukte bei thermischen und chemischen und photochemischen Prozessen entstehen; Dioxinspuren fallen vermutlich bei der Herstellung bestimmter Chlorphenole, aber auch in der Flugasche von Müllverbrennungsanlagen an, desgleichen scheinen Dioxine in Elektrofiltern von Feuerungsanlagen vorzukommen. Angesichts der Sublimierbarkeit und Wasserdampfflüchtigkeit dieser Verbindungen dürften diese polyhalogenierten aromatischen polycyclischen Verbindungen auch in den Rauchgasen präsent sein und teilweise sogar in dampfförmiger Phase vorliegen.

In den Müllverbrennungsanlagen ist es heute üblich, daß das gereinigte wasserdampfhaltige Abgas vor dem Austrag an die Atmosphäre wieder erwärmt wird, um ein Abregnen in unmittelbarer Umgebung der Anlage, insbesondere bei kaltem Wetter und in der kalten Jahreszeit zu vermeiden und um die Kaminabgase möglichst gut zu verteilen. Die Wiederaufheizung erfordert einen beträchtlichen Energieeintrag und führt letztlich dennoch zu mehr oder weniger

EP 0 208 156 B2

gestreckten Imissionen der Umluft und des Bodens in Nähe der Anlagen.

Der Erfindung liegt die Aufgabe zugrunde, ein Verfahren und eine zur Durchführung dieses Verfahrens besonders geeignete Anlage zur möglichst weitgehenden Restentfernung von Schadgasen, von Schadstoffaerosolen und schadstoffhaltigen Stäuben aus den herkömmlich gereinigten Rauchgasen und Restwaschgasen bereitzustellen, mit dem die Gehalte dieser Restgase an Schwermetallen und Schwermetallverbindungen sowie anderer Schadstoffe, wie zum Beispiel der polyhalogenierten aromatischen polycyclischen und sonstigen polyhalogenierten cyclischen Kohlenwasserstoffe, weitgehend aus dem Abgas eliminiert bzw. soweit herabgesetzt werden, daß die Emissionen weit unterhalb der heute üblichen und nach den gesetzlichen Bestimmungen noch zulässigen Werte gehalten werden. Der Gesetzgeber hat diesbezüglich in der TA Luft 1974 klare Limite gesetzt, die von Müllverbrennungsanlagenbetreibern einzuhalten sind

Die Erfindung schlägt hierzu das Verfahren nach Anspruch 1 mit bevorzugten Ausgestaltungen dieses Verfahren nach den Ansprüchen 2 bis 23 und die Anlage zur Durchführung dieses Verfahrens nach Anspruch 24 vor. Eine bevorzugte Ausbildung dieser Anlage ist schließlich Gegenstand des Anspruchs 24.

Der Erfindung liegt zugrunde, daß sich die Gegenwart von Wasserdampf in den Abgasen aus Müllverbrennüngsanlagen mit Naßwäschern hervorragend als Kontroll- und Steuerungsmittel für die Schadstoffentfernung nutzen läßt, indem durch Kondensation eines Hauptwasseranteils dieser Abgase gleichzeitig eine Abscheidung von Schadstoffen zusammen mit dem Kondensat erreicht wird. Bei den Abgasen bei Anlagen , die nach dem Quasitrockenverfahren oder Trockenverfahren arbeiten, kann dieser Wasserdampfgehalt beispielsweise durch Einspritzwasser erzeugt werden. Das erfindungsgemäße Verfahren ermöglicht darüber hinaus auch eine ökonomische Nutzung der Kondensationswärme. Durch Kondensieren des Hauptwasseranteils wird außerdem eine Verringerung des über den Kamin der Verbrennungsanlage abzulassenden Dampfvolumens erreicht. Auf eine Wiedererwärmung kann bei genügender Abkühlung verzichtet werden, da der Wassergehalt mit sinkender Temperatur stark verringert wird.

Die mit der Wasserdampfkondensation einhergehenden Schadstoffabscheidungen sind zumindest teilweise damit erklärbar, daR grundsätzlich jede flüchtige chemische Verbindung über das DampfdruckTemperatur-Gleichgewicht kontrolliert wird und mit Erniedrigen der Temperatur Taupunktsunterschreitungen und Desublimationen für Schadstoffkomponenten stattfinden, so daß es zu einer gleichzeitigen Kondensation mit Wasserdampf kommt. Es scheint jedoch noch zusätzlich zu einer bevorzugten Anlagerung von Schadstoffkomponenten an den Kondensationskeimen wie Nebeltröpfchen zu kommen, so daß sich das System aus sich heraus selbst wäscht und reinigt (Autoscrubbing-Effekt). Der Kondensationsvorgang wird dabei in sehr einfacher und reproduzierbarer Weise über eine Temperaturabsenkung (Kühlung) geregelt, wobei eine Einstellung auf unterschiedliches Verbrennungsgut bereits über den Temperaturparameter beherrschbar werden kann. Hilfsmittel wie das Zudosieren von chemischen Reagenzien, Absorbentien und Adsorbentien und das Zuleiten von Kondensationskeimen können den Abscheidungs-und Abtrennungsvorgang zusätzlich fördern.

Das erfindungsgemäße Verfahren ist bei Verbrennungsanlagen mit Nachreinigung nach dem Naßverfahren, Halbtrockenverfahren und Trockenverfahren geeignet, wobei im letzteren Falle die wesentlich höhere Staubfracht und Schadgasfracht auf elegante Weise entsorgt werden kann. Über die Kühlkondensation werden auch die noch enthaltenden sauren Gase wie HCl und HF entfernt.

Da die Kondensation zwangsläufig zu Taupunktsunterschreitungen führt, sind an die Beständigkeit des Materials der Abscheidevorrichtungen erhebliche Anforderungen zu stellen. Geeignete Materialien, die mit den Gasen und Kondensaten in Berührung kommen, sind Graphit, Keramik, Glas, Kunststoffe und korrosionsfeste Metalle.

Die Temperaturabsenkung sollte eine T-Differenz (x) von mindestens 1o°C und vorzugsweise von mindestens 15°C vorsehen. Es hat sich jedoch herausgestellt, daß die Temperatur so niedrig wie möglich eingestellt werden soll, da hierdurch auch flüchtigere Komponenten miterfaßt und abgeschieden werden. Temperaturabsenkungen von 2o°, 3o°C und manchmal von bis zu 5o°C (jeweils T-Differenz) sind deshalb besonders günstig.

Wenn das wasserdampfhaltige Restwaschgas nach dem Naßwäscher mit einer Eintrittstemperatur in den Kühler von ca. 6o bis 7o°Cgelangt, wird deshalb vorzugsweise bis auf 5o°C oder darunter gekühlt um mindestens einen Hauptanteil des Wasserdampfes auszukondensieren und damit gleichzeitig Restgehalte an Schadstoffen abzuscheiden.

Wie erwähnt, wird im erfindungsgemäßen Verfahren die Temperatur des wasserhaltigen Restwaschgases nach der üblichen Behandlung mit Alkalien und/oder Erdalkalien gemäß dem Trocken-, Halbtrocken- oder Naßverfahren so weit abgekühlt, daß mindestens ein Hauptanteil von etwa 5o % des im Abgas enthaltenen Wasserdampfes im Kühlersystem auskondensiert. Das Abgas sollte zu diesem Zeitpunkt mit Wasserdampf gesättigt oder gegebenenfalls übersättigt sein. Beim Trockenverfahren wird deshalb die bevorzugte Gassättigung durch gesonderte Zuführung von Wasser bzw. Wasserdampf bewirkt, das vorzugsweise aus dem Kreislauf des Verfahrens stammt.

Der Wasserdampfgehalt von gesättigter Luft ergibt sich nach folgender Gleichung:

$$[H_2O] = \frac{\text{Masse Wasserdampf (g)}}{\text{Masse Trockenluft (kg)}}$$

Aus der Wasserdampfsättigungstabelle lassen sich folgende Werte entnehmen (Grundlage Normaldruck):

Tabelle II

| T (°C) | /$H_2O$/ (g/kg) |
|--------|-----------------|
| 3o     | 28,1            |
| 4o     | 5o,6            |
| 45     | 67,4            |
| 5o     | 89,5            |
| 55     | 118,9           |
| 60     | 158,5           |
| 65     | 212,9           |
| 7o     | 289,7           |
| 75     | 4o3,o           |
| 8o     | 58o,o           |

Bei der erfindungsgemäß durchgeführten Temperaturabsenkung um $\Delta T$, die vorzugsweise mindestens 15°C betragen sollte, wird jeweils mindestens die Hauptmenge des Wasserdampfes (also mehr als 5o %) im Kühlersystem auskondensiert. Das Verfahren ist zwar auch bei einem geringeren Kondensationsgrad, d.h. weniger als 5o %, noch ausführbar; die Trennergebnisse sind in diesem Fall jedoch weitaus schlechter. Parallel hierzu verhalten sich auch viele der Schwermetallverbindungen, wobei nicht ausgeschlossen werden soll, daß die Schwermetalle in Form solcher Verbindungen vorliegen, die innerhalb des in Tab. II umrissenen Bereiches einen Siede- oder Sublimationspunkt aufweisen.

Anhand der nachfolgenden Berechnungsbeispiele` die ihrerseits bevorzugte T-Betriebsparameter darstellen, wird das Prinzip der erfindungsgemäßen T-Absenkung veranschaulicht:

| 8o°C 58o g/kg  65°C 212 g/kg | $\Delta T = 15°$ , | Kondensatanfall 57.5 %, bezogen auf den Ausgangswert |
|---|---|---|
| 7o°C 289 g/kg  55°C 119 g/kg | $\Delta T = 15°$ , | Kondensatanfall 58,7 %, bezogen auf den Ausgangswert |
| 6o°C 159 g/kg  45°C 67 g/kg | $\Delta T = 15°$ , | Kondensatanfall 57,5 %, bezogen auf den Ausgangswert |

Die erfindungsgemäß erzielbare Abscheidungsleistung ist anhand der folgenden Übersicht von Messungen an einer technischen Müllverbrennungsanlage (indirekte Kühlung mit Kühler aus V2A-Stahl) erkennbar. Die Schwermetallgehalte wurden dabei im Rauchgas vor der Kühlung und im Rauchgas nach der Kühlung gemessen. Wegen des Edelstahlkühlermaterials wurde von Schwermetallmessungen im Kondensat abgesehen, da hierdurch Verfälschungen eintreten können.

Tabelle III

| prozentuale Abscheidungsleistung (%)[*1] durch Abkühlung und Wasserdampfkondensation des Rauchgases einer Müllverbrennungsanlage | | | | | | | | | |
|---|---|---|---|---|---|---|---|---|---|
| Temperatur (°C) | ΔT (°C) | Fe | Cu | As | Zn | Hg | Cr | Ni | Pb |
| Werte im Rohgas vor Kühlen (mg/Nm$^3$) | - | ca.1oo | o,1-1 | o,1-6 | 1o | | | | 2 |
| 65 | - | 1oo% | 1oo% | 1oo% | 1oo% | 1oo% | 1oo% | 1oo% | 1oo% |
| 6o | 5 | | | | | 3o% | | | |
| 55 | 1o | | | | | 6o% | | | |
| 5o | 15 | 89,5 | 92,75 | 93,5 | 91,5 | 7o% | 95 | 97 | 95,25 |

[*1] Die Meßwerte sind Mittelwerte aus 4 Messungen(Meßreihen), der Wert für Arsen resultiert aus dem Mittel aus 6 Meßwerten. Eine Meßreihe fiel bezüglich Fe (66%), As (78%) und Cr(83%) stark aus der Reihe, was uU mit der Aufgabe eines speziell belasteten Verbrennungsgutes erklärt werden kann.

Aus Tab. III erkennt man, daß die Abscheidungsleistung bei ΔT = 15°C für Hg am schlechtesten ist. Dies ist aufgrund des Quecksilberdampfdrucks auch ohne weiteres verständlich; im Restgas war Hg demgemäß noch meßbar. Stark Quecksilber-belastete Verbrennungsgüter sind deshalb strengeren Bedingungen hinsichtlich Behandlung des Rauchgases zu unterwerfen, was nach dem erfindungsgemäßen Verfahren zweckmäßigerweise durch größere Temperaturabsenkungen von ΔT = 3o°c oder mehr erreicht werden kann. Eine induzierte Nebelbildung, beispielsweise durch Zuführung von zusätzlichem Wasser bzw. übersättigtem Wasserdampf fördert nicht nur bei Hg die erwünschte Erhöhung der Abscheidungsleistung. Im Kondensat des Versuchs zu Tab. III waren mehr als 9o % der Summengehalte an Säuren ($SO_3^=$, HCl, HF) aus dem Rohgas als Abscheidung nachweisbar.

Gegebenenfalls kann dem Kühlsystem auch ein Mittel zudosiert werden, daß die Alkalität des System gezielt verändert, bestimmte Umsetzungen mit den Schwermetallverbindungen bewirkt oder Schadstoffkomponenten in Verbindungen überführt, z.B. durch Komplexbildung usw., die eine geänderte und vorzugsweise geringere Flüchtigkeit und Löslichkeit aufweisen. So kann man im Falle des Quecksilbers $Na_2S$-Zusätze vornehmen, um das Hg in das schwerlösliche Hgs zu überführen; Quecksilberkomplexe erzeugende Reagentien wie 1,3,5-Triazin-2,4,6-trithiol oder SEVAR 2.ooo® sind andere geeignete Mittel zur Verstärkung des Abscheidungseffektes für das Problemmetall Hg im erfindungsgemäßen Verfahren.

Eine andere Methode der zusätzlichen Abscheidungsverstärkung besteht in der Zugabe von Mitteln, die mit Schadstoffkomponenten adsorptiv oder absorptiv reagieren und diese so binden, daß sie aus dem Kühlersystem in Form separierbarer Komponenten ausgetragen werden können. Im Falle der hochchlorierten aromatischen polycyclischen Kohlenwasserstoffe (wie Dioxine) und der polychlorierten cyclischen Kohlenwasserstoffe wie HCH sind Molekularsiebverbindungen wie Tone, Tonerden, Kieselgele und Adsorptivkohlen geeignete Bindungsreagentien.

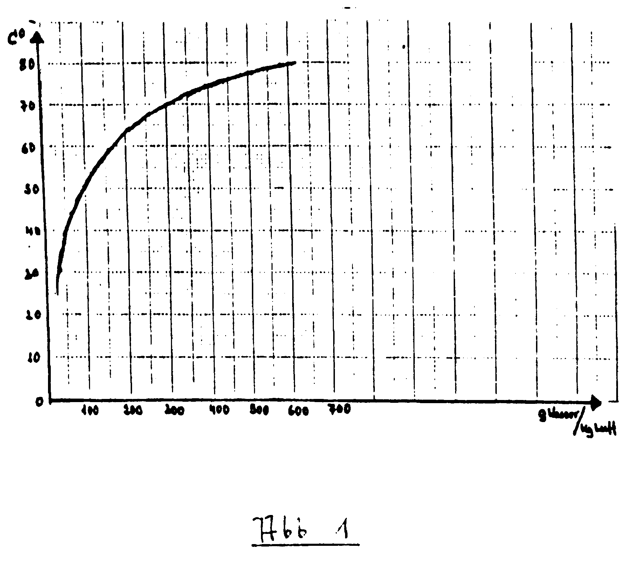

Die Dichte der trockenen Luft ist 1,2928 kg/Nm$^3$; 1 kg Trockenluft nimmt somit ein Volumen von o,7735 Nm$^3$ ein. Hieraus und mit der Wasserdampfsättigungskurve (Fig. 1) läßt sich ohne weiteres das Volumeninkrement errechnen, das von $H_2O$ im gesättigten Rauchgas bzw. Restwaschgas eingenommen wird,sowie die Energieersparnis abschätzen, die mit dem erfindungsgemäßen Verfahren verbunden ist. Selbstverständlich läßt sich aus der bekannten Beziehung der physikalischen Chemie auch die Volumenverminderung und damit die Verminderung der Belastung der Umgebungsluft ermitteln.

Es ist bekannt, daß zwar auch nach den heutigen Techniken gewisse Grenzkonzentrationen für Schadstoffe im Abgas aus Verbrennungsanlagen eingehalten werden können. Allerdings kann dies auch durch Emissionsstreckung oder Volumenvergrößerung erreicht werden, ohne daß der Massenstrom bezüglich einzelner Schadstoffkomponenten in g/d herabgesetzt wird. Bezüglich der derzeitigen Situation vgl. auch Chr. Korn und B.Fürmaier "Ergebnisse von Emissionsmessungen an Abfallverbrennungsanlagen, Zeitschrift; Müll und Abfall, S. 29-36, 1984. Diese Literaturstelle wird bezüglich der Rahmenbedingungen des erfindungsgemäßen Verfahrens und der Analysentechnik zum Gegenstand vorliegender Beschreibung gemacht. Als Orientierungsstandard für zulässige Höchstkonzentrationen gilt zur Zeit die Technische Anleitung Luft (TAL) 1974. Ob jedoch die derzeit angewendeten Techniken noch strengeren Auflagen, wie sie die vorgesehene Novellierung TA Luft II anstrebt, genügen können bzw. ob auch streckenweise bei stark belasteten Verbrennungsgütern die Konditionen erfüllt werden können, ist angesichts der ungewissen zukünftigen Entwicklung

EP 0 208 156 B2

des Müllanfall- und Müllentsorgungsproblems völlig ungewiß und muß bezweifelt werden.

Das erfindungsgemäßen Verfahren ist demgegenüber so ausgelegt, daß auch bei periodisch stark belastetem Müllgut eine einfache und verläßliche Anpassung an solche Sondersituationen möglich ist und ohne weiteres bestimmte Höchstkonzentrationen, aber auch Höchstabsolutmengen nicht überschritten werden brauchen. Dabei ist von besonderem Vorteil, daß eine stärkere Abkühlung nicht nur zu einem höheren Energienutzungsgrad aufgrund der Kondensatonswärme führt, sondern auch unnötige Energien zur Wiederaufheizung des aus dem Restwaschgas entfernten Wasserdampfes überflüssig werden, da der Saugzug für das Kaminabgas wesentlich niedriger gehalten werden kann als bisher.

Ein besonderer Vorzug des erfindungsgemäßen Verfahrens ist seine Automatisierbarkeit, indem bestimmte Schadstoffkonzentrationen einzelner Schadstoffkomponenten an bestimmten Stellen, z.B. vor der Wäsche bzw. vor der Kalkbehandlung(trocken) und danach kontinuierlich oder intermittierend meßanalytisch verfolgt werden und bei Überschreiten vorgegebener Schwellwerte bzw. Schwellwertdifferenzen zusätzliche schärfere Bedingungen zugeschaltet werden, wie eine stärkere Temperaturabsenkung, Behandlung mit chemischen Reagentien, Rückführung von Teilströmen und dergl.. Als besonders geeignete Indikatoren, die kontinuierlich gemessen werden können, dienen die Halogenide wie $Cl^-$ oder $F^-$ im Rauchgas und/oder im Restwaschgas, aber auch die $Cl^-$ und $F^-$-Konzentrationen, die im Rauchgaswaschwasser gemessen werden, können für diese Zwecke herangezogen werden. Im letzteren Fall ist von Vorteil, daß im Waschwasser relativ konstante Chloridkonzentrationen von ca. 4o-6o g/l vorliegen, während die $F^-$-Konzentrationen erfahrungsgemäß im Bereich von 15o - 9oo mg/l liegen. Diese bevorzugte Ausgestaltung des erfindungsgemäßen Verfahrens bietet zusätzliche Vorteile dann, wenn in dem Rauchgassystem bestimmte Relationen und Proportionalitäten zwischen solchen Indikatoranionen wie Chlorid und Fluorid und bestimmten Schwermetallkationen gegeben sind. Ähnlich verhält es sich bei der Registrierung und Messung von Kohlenmonoxid(CO) als Indikator für bestimmte Schwermetalle.

Bezüglich der Analysenmethoden s. Müll und Abfall, 2/84, S. 3o lk. Spalte.

Erfindungsgegenstand ist auch eine Vorrichtung zur Durchführung des beanspruchten Verfahrens. Müllverbrennungsanlagen werden nach dem Naßverfahren, Halbtrockenverfahren oder Trockenverfahren betrieben.

Die Erfindung wird nachfolgend an Ausführungsbeispielen anhand der beigefügten Zeichnung näher erläutert. In der Zeichnung zeigen:

Fig. 1     den Verlauf einer Wasserdampfsättigungskurve,

Fig. 2     eine Vorrichtung zur Durchführung des erfindungsgemäßen Verfahrens, wobei sich die Kondensationsstufe hinter dem Tröpfchenabscheider des Wäschers befindet,

Fig. 3     eine Möglichkeit einer Nachbehandlung der vereinigten Rauchgas-Waschwässer + Kondensats bzw. des reinen Kondensates (mitkondensierte Schadstoffkomponenten enthaltend).

Fig. 4     ein weiteres Flußschema für eine bevorzugte Ausgestaltung des Verfahrens,

Fig. 5     ein Blockdiagramm, in welchem gezeigt ist, daß die aus der Verbrennungszone abströmenden und Schadstoffe enthaltenden heißen Rauchgase entstaubt werden und das entstaubte Rauchgas einer Nachbehandlung ausgesetzt wird, wobei sich ein Wasserdampf enthaltendes Restwaschgas ergibt, welches einer erfindungsgemäßen Kühlbehandlung unterworfen wird,

Fig. 6     eine weitere Ausführungsform einer Vorrichtung zur Durchführung des erfindungsgemäßen Verfahrens.

Bei Verfahren mit Naßwäsche (Naßverfahren) besteht die Anlage aus einem Verbrennungsofen (1), Dampfkessel (2), Feststoffabscheider (12), d.i. meistens ein Elektrofilter, Rauchgaswäscher (3), der meistens mehrstufig ausgelegt ist und häufig eine vorgeschaltete Quenche aufweist, Tröpfenabscheider (6), Rauchgaswiedererwärmung (20), was meistens durch Zumischen von Heißluft erreicht wird, Saugzuggebläse (7) und dem Kamin (8). In den Wäscherkreislauf sind eingegliedert das Sedimat (4) zum Absetzen von Schlamm, ein Auffangbehälter (5) für das den Wäscher verlassende Waschwasser mit Verteilungseinrichtung für die Kreisläufe, Dosiereinrichtungen (9 und 10) für Chemikalienzusatz und die üblichen Hilfsmittel zum Transport der Verfahrensströme.

Die erfindungsgemäße Vorrichtung zur weitgehenden Restentfernung von Schadstoffen kann in eine wie oben skizzierte Müllverbrennungsanlage mit Naßwäscher in mehreren Möglichkeiten integriert werden.

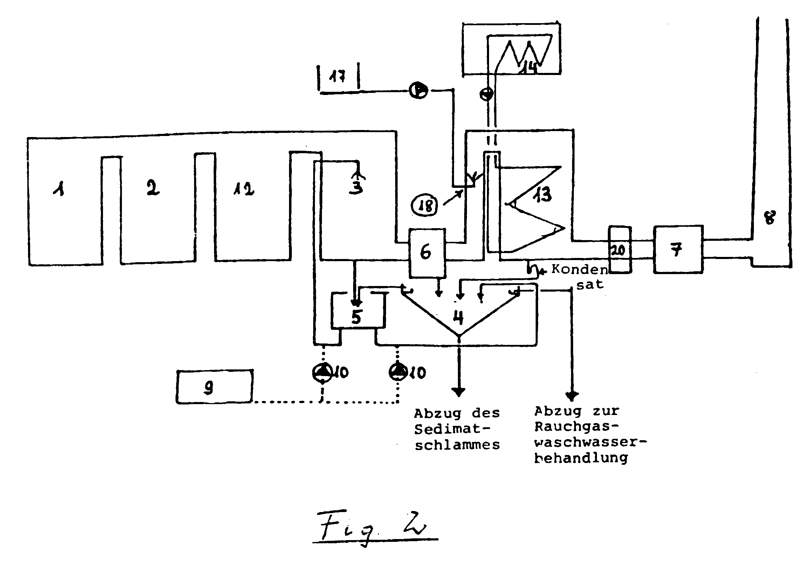

Fig. 2 zeigt eine Vorrichtung mit dem Verfahrensweg hinter der Verbrennungsanlage, die über einen Naßwäscher verfügt; dem Wäscher ist ein Wärmetauscher nachgeordnet. In Fig. 2 befindet sich die Kondensationsstufe (des erfindungsgemäßen Verfahrens) hinter dem Tröpfchenabscheider des Wäschers. Die im Wärmetauscher (13) aus den Rauchgasen entzogene Wärme kann in (14) einer Wärmenutzung zugeführt werden oder sie muß abgeführt werden. Das entstehende Kondensat enthält die Restschadstoffe des Restwaschgases. Es wird dem Wäscherkreislauf wieder zugeführt, um einerseits den Verdunstungsverlust auszugleichen und andererseits das Kondensat mit in die naßchemische Behandlung des Rauchgaswaschwassers einzubeziehen.

Die in vielen Fällen hinter Naßwäschen geforderte Wiederaufheizung der Restwaschgase dient einerseits zur Verhinderung des Abregnens der gesättigten Restwaschgase bei niedrigen Außentemperaturen und andererseits zur Kaminüberhöhung, um eine bessere Verteilung der Restschadstoffe in der Umgebung zu erreichen.

8

Aus der Energiebilanz einer Sonderabfallverbrennungsanlage geht hervor, daß von der bei der Verbrennung erzielten Energie von insgesamt ca. 27 MW etwa 1,13 MW zur Stromerzeugung und etwa 1,97 MW für die Wiederaufheizung der Rauchgase von etwa 7o°Cauf 1oo°C benötigt werden. Bei Anwendung des erfindungsgemäßen Verfahrens kann auf die Wiederaufheizung der Abgase gänzlich verzichtet werden, da die Hauptmenge des Wassers entfernt wird und aufgrund der weitgehenden Entfernung der Restschadstoffe eine wesentlich bessere Verteilung durch Kaminüberhöhung nicht mehr angezeigt ist. Durch den Wegfall der Wiederaufheizung, die in der Regel durch Zumischung von erhitzter Luft erfolgt, wird das Abgasvolumen weiter verringert, so daß die Leistung des Saugzuggebläses erheblich vermindert werden kann.

Da die Rauchgase hinter dem Feststoffabscheider (12) Temperaturen von ca. 25o - 3oo°C aufweisen, muß zunächst z.B. mit einem Verdampfungskühler durch Wasserinjektion die Temperatur abgesenkt werden. Diese Absenkung sollte in einer solchen Weise erfolgen, daß das Material des Wärmetauschers (13) für die jeweilige Temperatur- und Korrosionsbeständigkeit ausreicht. Im Regelfall kommen bei derartigen Wärmetauschern nur hochkorrosionsfeste Materialien wie z.B. Graphit, Glas oder Keramik in Betracht.

Die aus dem Wärmetauscher gewonnene Energie kann entweder einer gezielten Wärmenutzung (Eindampfung von Rauchgaswaschwasser) oder der Rückkühlung zugeführt werden.

Durch die Abkühlung des Rauchgases vor Eintritt in den Naßwäscher wird bewirkt, daß das Waschwasser im Wäscherkreislauf niedrige Temperaturen annimmt, so daß das resultierende Restwaschgas mit niedrigen Temperaturen den Tröpfchenabscheider verläßt.

Bei Müllverbrennungsanlagen mit Abscheidungsmethoden nach dem Halbtrockenverfahren oder nach dem trockenen Verfahren besteht die Gesamtanlage im allgemeinen aus einem Verbrennungsofen (1), Dampfkessel (2), einem Reaktor für die Einspeisung der alkalischen Suspension oder der alkalischen Feststoffe (11), einem Feststoffabscheider (12), im allgemeinen Zyklone und/oder Gewebefilter bzw. E-Filter; einem Verdampfungskühler (19), wobei dessen Funktion so dirigiert ist, daß im Falle der nachgeschalteten Gewebefilter eine Temperaturerniedrigung auf diejenige Temperatur bewirkt wird, die das Gewebe des Filters nicht schädigt, jedoch andererseits auch nicht zur Taupunktsunterschreitung führt, damit Verbackungen des Reaktionsmediums am Filter nicht eintreten können. Ferner sind enthalten das Saugzuggebläse (7) und der Kamin (8).

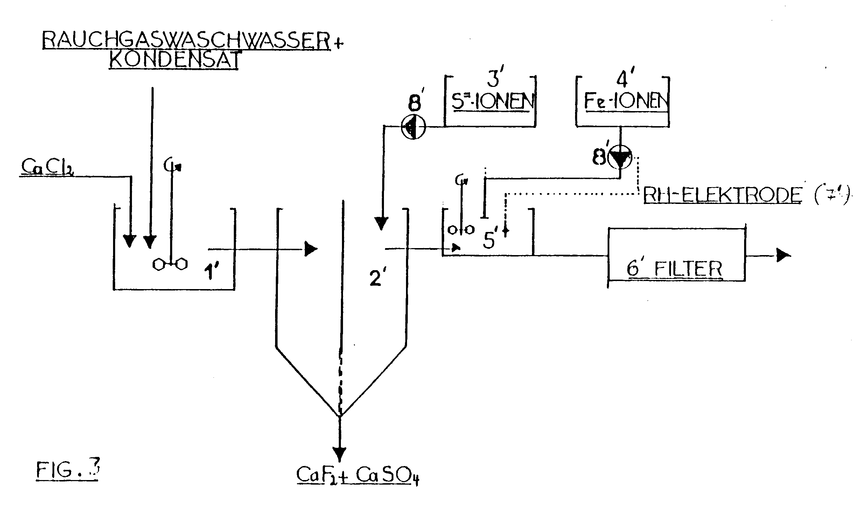

Fig. 3 veranschaulicht eine Möglichkeit der Nachbehandlung der vereinigten Rauchgas-Waschwässer + Kondensat bzw. des reinen Kondensats (mitkondensierte Schadstoffkomponenten enthaltend).

Wegen des oft beachtlichen Gehaltes der Rauchgase an Fluoridionen und des Gehaltes an $F^-$ in Rauchgaswaschwasser und Kondensat neben den Sulfationen wird das Rauchgaswaschwasser oder das vereinigte Rauchgaswaschwasser + Kondensat oder das Kondensat zunächst in einem Reaktionsgefäß (1') mit Calciumchloridlösung versetzt, um das Fluorid und das Sulfation weitgehend durch Fällen im Abscheidebecken (2') zu entfernen. Der abgesetzte Schlamm wird in einer Filterpresse abgepreßt, wobei das Filtrat wieder dem Becken (2') zugeführt wird. Zur Fällung der Schwermetallionen wird in das Becken (2') eine Lösung eines sulfidischen Fällungsmittels, wie z.B. $Na_2S$, zudosiert. Der Überschuß des sulfidischen Fällungsmittels wird, gesteuert über eine Redoxpotentialmessung mit $Fe^{2+}$, im Reaktionsgefäß (5')gefällt. Das so behandelte Abwasser wird von den gefällten Metallsulfiden im Filter (6') befreit. Das Filtrat kann entweder abgeleitet oder ggf. nach Eindampfung als Sole oder kristallin weiterverarbeitet und/oder weiterverwendet werden.

Zu Fig. 3 gelten die folgenden Legenden:

| | |
|---|---|
| 1' - | Reaktionsgefäß I |
| 2' - | Abscheidebecken |
| 3' - | Vorratstank für Sulfidlösung |
| 4' - | Vorratstank für $Fe^{++}$-Lösung |
| 5' - | Reaktionsgefäß II |
| 6' - | Filter zur Metallsulfidabscheidung |
| 7' - | Redoxpotentialsonde |
| 8' - | Dosierpumpen |

Zu den Fig. 2, 4, 5 und 6 gelten die folgenden Legenden, wobei jedoch eine gleichlautende Bezifferung nicht notwendigerweise identische Bauteile bzw. Vorrichtungskomponenten bezeichnen müssen, sondern lediglich auf gleiche oder ähnliche Funktionen derselben hinweisen.

| | |
|---|---|
| 1 - | Verbrennungsofen |
| 2 - | Kessel |
| 3 - | Wäscher |
| 4 - | Sedimatgefäß |
| 5 - | Wäscherablaufsammel- und Verteilungsgefäß |
| 6 - | Tröpfchenabscheider |

7 - Saugzug

8 - Kamin

9 - Vorratstank für alkalisches Zusatzmittel

1o - Dosierpumpen

11 - Reaktor für Halbtrocken- bzw. Trockenabscheidung

12 - Feststoffabscheider (Zyklon, E-Filter, Gewebefilter usw.)

13 - Kühler (indirekte Kühlung und Kondensatabscheidung)

14 - Wärmenutzung

15 - Verdampfungskühler (Direktkühlung durch Wasserinjektion)

16 - Förderpumpen

17 - Vorratstank für Zudosierungschemikalien

18 - Eindosiervorrichtung für Chemikalien oder übersättigten Wasserdampf

19 - Kühlstrecke zum Schutz von Gewebefiltern

2o - Abgaswiedererwärmung (meistens durch Zugabe von Heißluft)

Im erfindungsgemäßen Verfahren wird das im Kühler ausgeschiedene Kondensat im allgemeinen einer chemischen, chemisch-physikalischen oder physikalischen Nachbehandlung unterzogen, da mit auskondensiertem Wasserdampf zielgemäß gleichzeitig Restgehalte an Schadstoffkomponenten mitkondensieren oder in anderer Weise abgeschieden werden. Diese Nachbehandlung kann in einer Neutralisation oder in einer Fällungsreaktion und Abscheidung der Fällungsprodukte oder in einer anderen Reinigungsbehandlung bestehen, so daß möglichst reine und einheitliche Wasserphasen erhalten werden. Die gereinigten Lösungen sind meistens Salzlösungen, wie NaCl-Lösungen, die gegebenenfalls nach Eindampfen eines bestimmten Wasseranteils als Sole oder als kristalline Salze einer Wiederverwertung, z.B. in einer Chloralkalielektrolyse, und/oder anderen Zwecken zugeführt werden können.

So ist es möglich und bevorzugt, das Kondensat - dessen Kondensationswärme verfahrensmäßig genutzt wird - aus dem Kühler abzuziehen, einer chemisch-physikalischen Behandlung zu unterwerfen und ggf. wieder dem Wäscherkreislauf des Rauchgaswäschers zuzuführen. Bei Rückführung des Kondensats kann uU im Zuge eines mehrzyklischen Umlaufes anfangs auch eine direkte Zuleitung in den Wäscherkreislauf in Betracht kommen. Anderweitige Verwertungen des geklärten und gereinigten Wassers sind für den Fachmann ohne weiteres absehbar.

Wenn die erfindungsgemäße Kühlungskondensation unter gleichzeitigem Zusatz von Chemikalien (Reagentien) oder Absorbentien erfolgt, wobei zum Beispiel die den Naßwäscher oder Behandlungseinheit (Trockenverfahren) verlassenden Restwaschgase an mit Füllkörpern gefüllten Türmen vorbeistreichen und dabei abgekühlt werden, während die Füllkörper im Gegenstrom mit dem Kühlwasser und ggf. mit den Zusätzen an chemischen Reagentien beaufschlagt werden, ist nach chemisch-physikalischer Behandlung des Kondensats und des ggf. zusätzlich anfallenden Spülwassers ebenfalls eine Rückleitung in den Wäscherkreislauf möglich; durch derartige geschlossene Wasserkreisläufe ist das Verfahren der Erfindung auch hinsichtlich der Wassernutzung besonders wirtschaftlich durchführbar.

Bei der Ausgestaltung des erfindungsgemäßen Verfahrens, die zunächst ohne Naßwäsche innerhalb der Rauchgasgesamtbehandlung arbeitet, werden die Rauchgase vor der herkömmlichen Behandlung erst durch thermische Volumenreduktion mengenmäßig vermindert und durch Kühlungskondensation wird dabei Wasserdampf zusammen mit Schadstoffrestgehalten, wie Säuren, Stäuben und Aerosolen, die aus der Verbrennung resultieren, abgeschieden, so daß das Restwaschgas weitgehend entgiftet wird. Die abgeschiedenen Kondensate werden dann abgezogen und chemischphysikalisch behandelt; das Klarfiltrat wird entweder abgeleitet oder vorzugsweise in den Wäscherkreislauf zurückgeführt. Die abgekühlten Gase gelangen dann mit einer niedrigeren Temperatur und in ihrem Volumen entsprechend verringert in die Behandlungseinheit, in der sie einer Alkali- bzw. Erdalkalibehandlung und ggf. unter Zusatz weiterer Chemikalien unterzogen werden. Falls in diesem nachgeschalteten Stadium der konventionellen alkalischen Behandlung eine Naßwäsche vorgesehen ist, sollte die Waschtemperatur vorzugsweise nur Temperaturen bis höchstens 3o°C aufweisen.

Die wäßrigen Abgänge aus der Kondensation oder aus dem Wäscherkreislauf können nach dem erfindungsgemäßen Verfahren durch Fällen mit Calciumchlorid von dem Fluorid und Sulfat weitgehend befreit werden und anschließend kann, gegebenenfalls nach vorheriger Eindampfung unter Verdampfen eines Teils des wäßrigen Lösungsmittels, eine Ausfällung der Schwermetalle durch Fällungsmittel wie z.B. Natriumsulfid vorgenommen werden, so daß nach Entfernen der Fällungsprodukte vorwiegend Natriumchloridlösung resultiert, die weiterverarbeitbar und verwertbar ist. Dabei wird im vorstehenden Fall bevorzugt, die wäßrigen Lösungen in einer geeigneten Eindampfanlage aus korrosionsfestem Material, z.B. aus Kunststoff, Glas, Keramik oder Graphit bis zur Sättigung oder noch stärker einzuengen.

Eine besonders geeignete Nachbehandlung innerhalb des erfindungsgemäßen Verfahrens besteht deshalb darin, daß das im Kühlersystem gebildete Kondensat, mit dem ein wesentlicher Teil der Schadstoffgehalte aus dem Restwaschgas, Rauchgas oder nachbehandelten Abgas abgeschieden worden ist, neutralisiert wird und der wäßrige Abgang mit $CaCl_2$ behandelt wird, um Fluorid und Sulfat zu fällen, das Filtrat dann gegebenenfalls eingeengt und mit einem Fällungsmittel für die Schwermetallgehalte, wie $Na_2S$, behandelt wird, so daß eine vorwiegend aus NaCl bestehende Lösung resultiert.

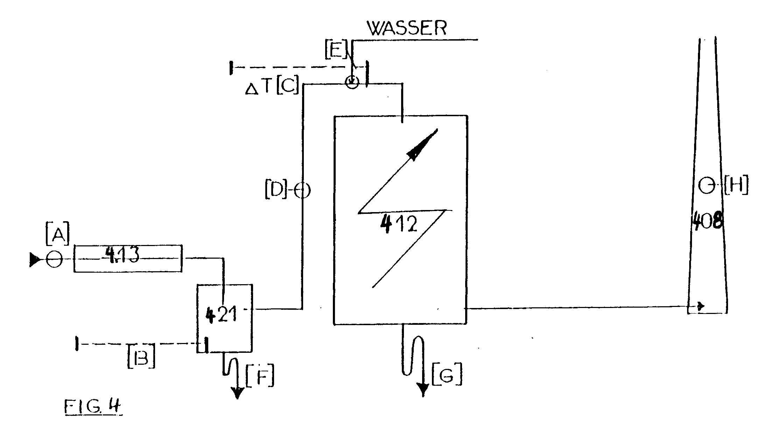

In Fig. 4 ist ein weiteres Flußschema für eine erfindungsgemäße und bevorzugte Ausgestaltung des Verfahrens dargestellt. Diese Arbeitsweise entspricht derjenigen von Beispiel 2, bei dem die Verbrennungsprodukte aus einer Sondermüllverbrennungsanlage der erfindungsgemäßen Kühlungskondensation unterworfen werden. Die Anlage von Fig. 4 umfaßt einen Kühler (413), einen Kondensator (421), ein Elektrofilter (412) und den Kamin (4o8). Nicht gezeigt ist die herkömmliche Behandlung mittels alkalischer Zusätze, die vor der Kondensationskühlung liegt.

Die in Fig. 4 mit A, D, F, G und H bezeichneten Stellen enthalten eine Meßeinrichtung, mit der die Konzentration bzw. der Massenstrom eines typischen Schadstoffes messend verfolgt werden kann. Bei (A) wird der Massenstrom einer Schadstoffkomponente, die im Rohgas enthalten ist, z.B. des Quecksilbers in g Hg/h gemessen; bei (D) mißt man den Massenstrom dieser Komponente im Gas nach dem Kühler;bei (G) wird die Schadstoffmenge in dem Kondensat des E-Filters und bei (F) die Schadstoffmenge im Kondensat des Kühlers gemessen; (H) mißt den Massenstrom (z.B. mg Hg/h) im Reingas nach Verlassen des E-Filters und vor Ablassen über den Kamin. Bei (E) wird Wasser eingedüst. (B) und (C) sollen die 4T-Meßstrecke andeuten, wobei einerseits die Temperaturabsenkung im Kühler/Kondensator-System und andererseits die leitungsbezogene zusätzliche Abkühlung bis zum E-Filter erfaßt werden. Es ist zulässig, die Kondensationskühlung auch mehrstufig, z.B. zweistufig auszulegen, was nach Fig. 4 durch die beiden $\Delta$T-Strecken (B) und (C) angedeutet wird.

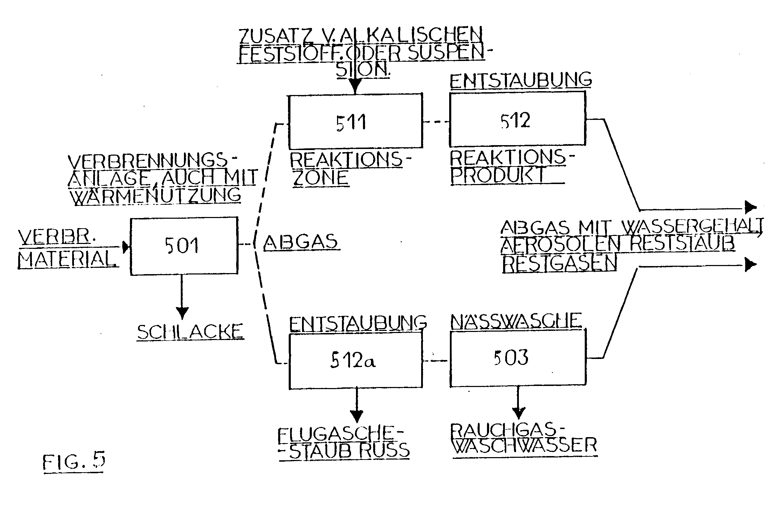

Wie bereits bemerkt, wird das erfindungsgemäße Verfahren in ein herkömmliches Verbrennungs-und Behandlungsverfahren für Müll und Sondermüll integriert, wobei die Nachbehandlung im allgemeinen eine Entstaubung und eine Alkalienbehandlung einschließt. Beim Trockenverfahren folgt die Entstaubung zweckmäßigerweise nach der Alkalienbehandlung. Bei einem derartigen Verfahren werden die aus der Verbrennungszone der Müll- bzw. Sondermüllverbrennungsanlage abströmenden und Schadstoffe enthaltenden heißen Rauchgase entstaubt und das entstaubte Rauchgas wird in einer Nachbehandlung nach dem Naßverfahren, dem Halbtrockenverfahren oder dem Trockenverfahren behandelt, so daß sich ein Wasserdampf enthaltendes Restwaschgas ergibt. Fig. 5 gibt im Blockdiagramm das Fließschema für ein allgemeines Verfahren dieser Art wieder. Das Verbrennungsgut wird in der Verbrennungsanlage (7o1), zum Beispiel in einem Verbrennungsofen, meistens unter Wärmenutzung verbrannt, wobei die Verbrennungsprodukte Schlacke und Rauchgase sind. Beim Trocken- bzw. Halbtrockenverfahren durchläuft das noch zahlreiche Laststoffe und Wasserdampf mitführende Rauchgas eine Reaktionszone 711, in der es unter Zusatz von alkalischen und/oder erdalkalischen Feststoffen oder Suspensionen behandelt wird, ohne daß sich ein Abwasser ergibt. Dann folgt meistens erst die Enstaubung (712). Beim Naßverfahren wird in der Regel zunächst entstaubt (712a) und anschließend unter Zusatz alkalischer Reagentien naß gewaschen. Das aus diesen herkömmlichen Behandlungen resultierende "Restwaschgas" (der Begriff ist in vorliegender Benutzung nicht auf das Naßverfahren beschränkt) wird dann einer erfindungsgemäßen Kühlbehandlung unterworfen.

Das erfindungsgemäße Verfahren ist so variabel und anpaßbar, daß das Verbrennungsgut, wie Müll oder Sondermüll mit sehr heterogenen Stoffen von nicht bzw. nur schwer definierbarer und im allgemeinen sehr stark schwankender Zusammensetzung, in reproduzierbarer und kontrollierbarer Weise unter Energieeinsparung verbrannt werden kann.

Bekannte Techniken sind unter Umständen zusammen mit dem erfindungsgemäßen Verfahren anwendbar. Eine bevorzugte Ausgestaltung des Verfahrens der Erfindung besteht darin, daß das aus dem Kühlersystem mit einer Temperatur von höchstens T-x austretende Restgas vor Abgabe an die Atmosphäre an einem Elektroabscheider vorbeigeführt wird, um eventuelle Restschadstoffe noch weiter abzusenken. Ein hierfür geeigneter Elektroabscheider wird in der DE-B 27 43 292 beschrieben. Es ist für die Funktionsfähigkeit dieses Elektroabscheiders wesentlich, daß die Temperatur des Restgases nur wenige Grade und auf jeden Fall um nicht mehr als 8-9°C absinkt.

Die folgenden Beispiele dienen der weiteren Erläuterung des erfindungsgemäßen Verfahrens und bevorzugter Vorrichtungen zu dessen Ausführung. Sofern innerhalb der Beispiele Testreihen mit Minimum-und Maximumwerten wiedergegeben sind, sind diese Angaben nicht nur Ausdruck für die Leistungsfähigkeit des Verfahrens, sondern sie definieren im Hinblick auf die verfahrenswesentlichen Parameter wie $\Delta$T gleichzeitig einen bevorzugten Arbeitsbereich zur Erzielung bestimmter Schadstoffentfernungen.

Beispiel 1

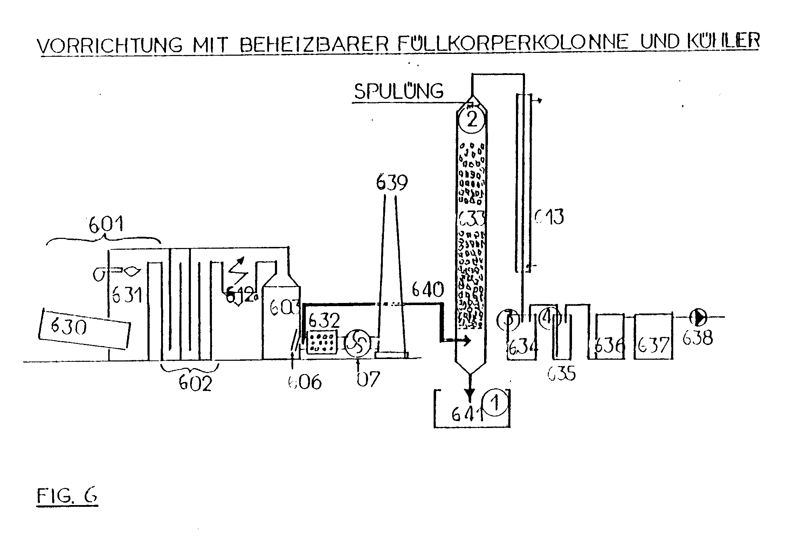

Zur Durchführung des Beispiels diente eine Vorrichtung, wie sie in Abb. 6 gezeigt ist. Abb. 6 zeigt schematisch eine Vorrichtung gemäß der Erfindung, mit einem Verbrennungsofen (6o1), der u.a. ein Drehrohr (63o) und eine Nachbrennkammer (631) enthält, mit einem Kessel (6o2), einem E-Filter (612a), einem Wäscher (6o3) mit Tröpfchenabscheider (6o6), mit einer Rauchgasaufheizung (632) und einem Saugzug (6o7). Das gewaschene Rauchgas wird in einen Aerosolabscheider (833) abgezogen, der vorzugsweise als Kolonne ausgebildet ist, und gelangt dann in einen Kühler (613). Das Kondensat aus 613 sammelt sich in dem Kondensatsammelgefäß (634). Dem Kühler (613) nachgeschaltet sind hier gemäß bevorzugter Ausgestaltungen der erfindungsgemäßen Vorrichtung ein Absorptionsgefäß (635) für eine saure Absorptionslösung, ein Trockenturm (636), eine Gasuhr (637) und eine Pumpe (638), die das gereinigte und von Schadstoffenbefreite Restwaschgas zum Kamin (nicht gezeigt) befördert. Die Rauchgasaufheizung erfolgt mittels Heißluftzufuhr (639), und über die beheizte Leitung 64o wird das aufgeheizte Restwaschgas isokinetisch abgesaugt.

Im Aerosolabscheider (633) ist eine im Bedarfsfall von oben nach unten gerichtete Spülung vorgesehen, die zum Beispiel bei 641 in die beheizbare Füllkörperkolonne (633) geleitet wird. Mit ①, ②, ③ und ④ sind in Fig. 6 Meß- bzw. Probeentnahmestellen bezeichnet. 641 bezeichnet das Aerosolsammelgefäß, in dem der Ablauf des abgeschiedenen Aerosols gesammelt wird. Bei ① erfolgt die Probenahme aus dem Ablauf des abgeschiedenen Aerosols, bei ② die Entnahme des aerosolfreien Abgases (Reingas), bei ③ werden Proben aus dem Kondensat nach dem Kühler entnommen, das den kondensationsfähigen Anteil des Abgases enthält. Bei ④ werden Proben entnommen, die durch Absorption des Restgehaltes in einer sauren Absorptionslösung zugänglich gemacht werden. Es versteht sich, daß sowohl die Einrichtungen zur isokinetischen Absaugung , d.h. die Rauchgasaufheizung, die Beheizung der Leitung 64o sowie die der erfindungsgemäßen Kühlung nachgeschalteten Einrichtungen wie saure Absorption (635) nicht zwingend notwendige Teile der Vorrichtung sind, um das Verfahren der Erfindung auszuführen.

Nachfolgend werden die Züge der Vorrichtung gemäß Fig. 6 im einzelnen erläutert.

Zur Entnahme des Abgases für die Aerosolabscheiderkolonne

Die Abgasabzweigstelle befand sich nach dem Aerosolabscheider (6o6) und vor dem Saugzuggebläse (6o7), d.h. im Unterdruckteil des Wäschers der Müllverbrennungsanlage (6o1). Sie lag vor der Warmluftzumischung (632). Die Abgasprobenahme erfolgte über einen 2''-Stutzen, in den ein Stahlrohr von 1o mm Durchmesser eingebracht war. Das Probegas wurde über einen Heizschlauch aus Teflon$^{®}$ von 1o mm Innendurchmesser in den Aerosolabscheider (Kolonne 633) gesaugt. Als Ansaugvorrichtung diente ein Gebläse nebst Gasuhr mit Unterdruckmesser und Temperaturanzeige.

Zu den Probenahmestellen und den durchgeführten Untersuchungen

An folgenden Stellen wurden zur Bestimmung von Schwermetallgehalten des Abgases Proben gezogen:

① Aerosolgebundener Anteil des Schwermetallgehaltes des Abgases. Hierzu wurde das in der Kolonne (633) abgeschiedene Aerosol als Kondensat I am Fuß der Kolonne (641) gesammelt und untersucht. Die Angabe der Werte erfolgte in $\mu m/m^3$, um die Meßergebnisse untereinander vergleichen zu können.

② Reingas am Kopf der beheizten Kolonne (633), hier handelt es sich definitionsgemäß um das aerosolfreie Abgas.

③ Kondensationsfähiger Anteil des Schwermetallgehaltes des Abgases. Das Reingas wurde im Rahmen der Untersuchungen nach dem Verlassen der Kolonne (633) auf ca. 2o°C abgekühlt und das anfallende Kondensat (mit II bezeichnet) wurde auf Menge und Schwermetallgehalte untersucht. Die Wiedergabe der Werte erfolgt wiederum in $\mu g/m^3$. Sie geben den Anteil der Schwermetalle wieder, der beim Abkühlen des Abgases zusammen mit Wasser ausgeschieden wird (Sammelgefäß 634).

④ Restgehalt an Schwermetallen: Der nach der Aerosolabscheidung und Abkühlung gemäß dem erfindungsgemäßen Verfahren noch verbleibende Schwermetallgehalt des Abgases wurde auf bekannte Weise bestimmt. Hierzu wurde das Reingas aus dem Aerosolabscheider (633) nach der Abkühlung in 813 durch eine Absorptionslösung aus 1o % Salpetersäure/1o % Schwefelsäure geleitet. Die anfallende Lösung wurde als Kondensat III bezeichnet. Die Angabe der Werte erfolgte wieder in $\mu g/m^3$.

Alle Konzentrationsangaben beziehen sich auf Abgas-trocken unter Normalzustand.

Der Quecksilbergehalt der Probelösungen wurde nach DEV E12 mittels flammenloser Atomabsorption bestimmt. Die Blei-, Kupfer- und Nickelgehalte wurden mittels Atomabsorption ermittelt.

Zu den Kenndaten der Betriebsweise des Aerosolabscheider

Der Abscheider wurde unter folgenden Bedingungen während der nachfolgenden Versuche Nr. 1 bis 36 betrieben:

| | |
|---|---|
| Temperatur | 72°C (63°C bis 83°C) |
| Unterdruck | 115 mbar (65 mbar - 152 mbar) |
| durchgesetzte Gasmenge | 1,2 m³/h. |

Zu den Ergebnissen

(A) Quecksilber-, Blei-, Kupfer- und Nickelgehalte des Reingases nach dem Aerosolabscheider (8o6) Die Meßwerte sind den folgenden Tabellen IV bis VI zu entnehmen. Es ergeben sich bei den Versuchen Nr. 1 bis 36 folgende Mittelwerte mit einer Schwankungsbreite von"x min" bis "x max".

| Quecksilber (Hg) | $167 \pm 143$ $\mu$g/m$^3$ |
|---|---|
| - x min bis x max | 9 bis 695 $\mu$g/m$^3$ |
| Blei (Pb) | $333 + 252$ $\mu$g/m$^3$ |
| - x min bis x max | 53 bis 1.o12 $\mu$g/m$^3$ |
| Kupfer (Cu) | $65 \pm 47$ $\mu$g/m$^3$ |
| - x min bis x max | 15 bis 233 $\mu$g/m$^3$ |
| Nickel (Ni) | $76 \pm 45$ $\mu$g/m$^3$ |
| - x min bis x max | 34 bis 292 $\mu$g/m$^3$ |

(B) Quecksilber-, Blei-, Kupfer- und Nickelgehalte des Aerosols Der als Kondensat I bezeichnete Aerosolanteil des Abgases wurde am Fuß des Aerosolabscheiders abgezogen. Die Aerosolmengen betrugen bei den Versuchen Nr. 1 bis 36 im Mittel 42 ml $\pm$ 16 ml je Absaugung mit einer Schwankungsbreite von 2o bis 74 ml. Sie sind für die Erfindung ohne Bedeutung.
(C) Kondensationsfähiger Quecksilber-, Blei-, Kupfer- und Nickelgehalt des Abgases: Die über das Kondensat II bestimmten kondensationsfähigen Quecksilber-, Blei-, Kupfer-und Nickelgehalte des Abgases, d.h. des Reingases, sind in den folgenden Tabellen IV bis VI zusammengestellt. Die durchschnittliche Menge an Kondensat betrug bei den Absaugungen Nr. 4 bis 36 im Mittel 173 ml $\pm$ 52 ml mit einer Schwankungsbreite von 1oo bis 32o ml. Die gemessenen Mittelwerte und Schwankungsbreiten sind nachfolgend für die Versuche Nr. 4 bis 36 aufgeführt.

| Quecksilber (Hg) | $187 \pm 343$ $\mu$g/m$^3$ |
|---|---|
| - x min bis x max | 5 bis 1.612 $\mu$g/m$^3$ |
| Blei (Pb) | $143 \pm 148$ $\mu$g/m$^3$ |
| - x min bis x max | 13 bis 677 $\mu$g/m$^3$ |
| Kupfer (Cu) | $36 \pm 37$ $\mu$g/m$^3$ |
| - x min bis x max | 5 bis 139 $\mu$g/m$^3$ |
| Nickel (Ni) | $19 \pm 11$ $\mu$g/m$^3$ |
| - x min bis x max | 4 bis 69 $\mu$g/m$^3$ |

(D) Quecksilber-, Blei-, Kupfer- und Nickelrestgehalte des Abgases Die aus dem Kondensat III bestimmten Restgehalte des Abgases, d.h. des Reingases hinter der Kolonne, an Quecksilber, Blei, Kupfer und Nickel sind in den Tabellen IV bis VI wiedergegeben. Die Untersuchungen begannen ab Versuch Nr. 21. Die Durchschnittswerte der Messungen Nr. 21 bis 36 sind mit den zugehörigen Schwankungsbreiten nachfolgend wiedergegeben.

EP 0 208 156 B2

| Quecksilber (Hg) | $25 \pm 24$ µg/m$^3$ |
|---|---|
| - x min bis x max | 4 bis 97 µg/m$^3$ |
| Blei (Pb) | $147 \pm 215$ µg/m$^3$ |
| - x min bis x max | 1 bis 855 µg/m$^3$ |
| Kupfer (Cu) | $19 \pm 14$ µg/m$^3$ |
| - x min bis x max | 3 bis 49 µg/m$^3$ |
| Nickel (Ni) | $19 \pm 6$ µg/m$^3$ |
| - x min bis x max | 8 bis 33 µg/m$^3$ |

(E) Sonderversuche ohne Beheizung der Kolonne.

Diese Versuche simulieren die Verhältnisse, wie sie bei direkter Kühlung in einem mit Füllkörpern gefüllten Kühlturm auftreten.

Für die Versuche Nr. 36 bis 42 wurde die Kolonne ohne Beheizung betrieben. Es stellte sich im Reingas am Kopf der Kolonne eine Gastemperatur von durchschnittlich 36°C ein. Während der Versuche Nr. 4o und 41 wurde noch zusätzlich Wasser in die Kolonne dosiert und Zwar pro Absaugung von etwa 1 1/2 h 2 Liter.

Zu den Ergebnissen

Es wird nachfolgend zwischen Versuchsgruppe A (Versuche Nr. 36 bis 39 sowie 42) und Versuchsgruppe B (Versuche Nr. 4o und 41) unterschieden.

(A) Quecksilber., Blei-, Kupfer- und Nickelgehalte des Reingases des Aerosolabscheiders

Die Meßwerte sind in den Tabellen IV bis VI wiedergegeben. Die Mittelwerte der Versuchsgruppe A sind nachfolgend zusammengefaßt:

| Quecksilber (Hg) | 13o µg/m$^3$ |
|---|---|
| - x min bis x max | 72 bis 193 µg/m$^3$ |
| Blei (Pb) | 1o1 µg/m$^3$ |
| - x min bis x max | 45 bis 177 µg/m$^3$ |
| Kupfer (Cu) | 24 µg/m$^3$ |
| - x min bis x max | 15 bis 41 µg/m$^3$ |
| Nickel (Ni) | 39 µg/m$^3$ |
| - x min bis x max | 29 bis 51 µg/m$^3$ |

Die Versuchsgruppe B lieferte folgende Meßwerte:

| Quecksilber (Hg) | 1o7 und 72 µg/m$^3$ |
|---|---|
| Blei (Pb) | 153 und 334 µg/m$^3$ |
| Kupfer (Cu) | 34 und 78 µg/m$^3$ |
| Nickel (Ni) | 37 und 41 µg/m$^3$ |

14

(B) Quecksilber-, Blei-, Kupfer- und Nickelgehalte des Aerosols sowie Gehalte an kondensationsfähigen Schwermetallen

Bei unbeheizter Kolonne scheidet sich neben Aerosol auch noch Kondensat ab, das Schwermetalle enthält. Die Umrechnung der Geholte auf die Konzentration im Abgas ergab bei der Versuchsgruppe A folgende Werte, die in den Tabellen IV bis VI in der Spalte "Aerosol" angegeben sind. Die Schwankungen sind so groß, daß auf Mittelwertbildung verzichtet wurde und alle Meßwerte angegeben wurden.

| Quecksilber (Hg) | 14, 486, 2.609, 266 und 118 $\mu g/m^3$ |
|---|---|
| Blei (Pb) | 5, 1.834, 2.203, 1.373 und 594 $\mu g/m^3$ |
| Kupfer (Cu) | 1, 7.23o, 21.193, 3.735 und 71o $\mu g/m^3$ |
| Nickel (Ni) | 1o.898, 5.oo6, 8.95o und 1.798 $\mu g/m^3$ |

Die Interpretation dieser Werte findet sich unter dem Abschnitt "Zusammenfassung".
Bei der Versuchsgruppe B wurden folgende Werte ermittelt:

| Quecksilber (Hg) | 12.14o und 973 $\mu g/m^3$ |
|---|---|
| Blei (Pb) | 592 und 546 $\mu g/m^3$ |
| Kupfer (Cu) | 26.6o1 und 2.o91 $\mu g/m^3$ |
| Nickel (Ni) | 6.427 und 1.321 $\mu g/m^3$ |

Auch diese Werte werden im Abschnitt "Zusammenfassung" interpretiert.

Kondensationsfähiger Quecksilber-, Blei-, Kupfer- und Nickelgehalt des Abgases nach der Kolonne Auch bei den Sonderversuchen wurde das Reingas nach der Kolonne auf ca. 2o°C abgekühlt. Die über das anfallende Kondensat II bestimmten Schwermetallgehalte des Reingases sind in den Tab. IV bis VI zusammengestellt. Für die Versuchsgruppe A sind folgende Werte kennzeichnend:

| Quecksilber (Hg) | 27 $\mu g/m^3$ |
|---|---|
| - x min bis x max | 11 bis 68 $\mu g/m^3$ |
| Blei (Pb) | 18 $\mu g/m^3$ |
| - x min bis x max | 9 bis 4o $\mu g/m^3$ |
| Kupfer (Cu) | 13 $\mu g/m^3$ |
| x min bis x max | 3 bis 46 $\mu g/m^3$ |
| Nickel (Ni) | 11 $\mu g/m^3$ |
| - x min bis x max | 3 bis 19 $\mu g/m^3$ |

Die Versuchsgruppe B ist durch folgende Werte gekennzeichnet:

| Quecksilber (Hg) | 8 und 6 $\mu g/m^3$ |
|---|---|
| Blei (Pb) | 8 und 14 $\mu g/m^3$ |
| Kupfer (Cu) | 2 und 8 $\mu g/m^3$ |
| Nickel (Ni) | 3 und 6 $\mu g/m^3$ |

Durch die vorherige Abkühlung des Abgases in der Kolonne scheiden sich bei der weiteren Abkühlung außerhalb der Kolonne nur noch geringe, aber dennoch nachweisbare Mengen ab.

Zusammenfassung und Interpretation der Meßergebnisse

In Tab. VII sind die Mittelwerte der Meßergebnisse ohne Berücksichtigung der Sonderversuche zusammengestellt. Ein Vergleich von Spalte 1 und Spalte 2 zeigt, daß über das Aerosol nur eine geringe Schwermetallmenge emittiert wird. Der Schwermetallgehalt des aerosolfreien Abgases, d.h. des Reingases, kann beträchtlich gesenkt werden, wenn das Abgas auf ca. 2o°C abgekühlt wird. Mit dem Kondensat wird ein erheblicher Teil der Schwermetallfracht des Reingases aus dem Abgasstrom abgetrennt. So verbleiben bei Hg nur noch 25 $\mu g/m^3$ im Abgas, das sind 15 % des aerosolfreien Gases. Bei Blei verblieben 147 $\mu g/m^3$ (44 %), bei Kupfer 19 $\mu g/m^3$ (29 %) und bei Nickel 19 $\mu g/m^3$ (25 %).

Die Meßergebnisse zeigen, daß mit der Abkühlung des Reingases der Schwermetallgehalt weiter verringert werden kann.

Spalte 5 in Tab. VII gibt den abscheidbaren Anteil an Schwermetallen wieder. Dieser Summenwert setzt sich aus dem Aerosolanteil und dem kondensationsfähigen Anteil zusammen. Spalte 6 enthält die Summe der Meßwerte der Sp. 1 und 2. Es handelt sich um die Gesamtbelastung des aerosolhaltigen Abgases mit Schwermetallen. Wie ersichtlich, sind Quecksilber mit 183 $\mu g/m^3$ und Blei mit 367 $\mu g/m^3$ die mengenmäßig bedeutendsten Schwermetalle.

Es muß allerdings aufgrund der Sonderversuche angenommen werden, daß der Schwermetallgehalt des Aerosols höher als gemessen ist.

Der höhere Kondensatanfall, insbesondere in Kombination mit zusätzlich eingebrachtem Wasser, führt zu beachtlichen Schwermetallgehalten im abfließenden Kondensat. Es sei z.B. auf den Quecksilbergehalt von 12.14o $\mu g/m^3$ bei den Sonderversuchen mit Spülung verwiesen. Entsprechendes gilt für Kupfer und Nickel.

Die Erklärung ist darin zu sehen, daß auf den Raschigringen (Füllkörper) Aerosole unter Ausscheidung von Schwermetallsalzen verdampfen. Die abgeschiedenen Salze gehen dann bei erhöhtem Kondensatanfall in Lösung.

Die Versuche, zwischen Aerosolanteil und kondensationsfähigem Anteil zu unterscheiden, zeigen, daß die benutzte Füllkörperkolonne offenbar nur grobdisperse Aerosole abscheidet, während feindisperse und dampfförmige Stoffe, insbesondere die Schwermetalle, erst bei der Kondensation zu einem erheblichen Anteil (zu ca. 6o-86 % gemäß Tab.VI ) ausgeschieden werden.

Das erfindungsgemäße "Auskondensieren" von Schwermetallen bereits in der Kolonne (833) führt zu einer geringeren Schwermetallkonzentration im Reingas, was durch die Versuche auch bestätigt wurde, siehe Tab. VII . Dementsprechend ist auch der Gehalt an kondensationsfähigen Anteilen im Reingas nach der Kolonne eindeutig niedriger. Die Restgehalte an Schwermetallen stimmen in beiden Versuchsreihen innerhalb der Fehlergrenze überein.

Tabelle IV

| Quecksilbergeholt des Reingases, des Aerosols sowie kondensationsfähiger Anteil des Reingases und Restgehalt (jeweils in $\mu g/m^3$) | | | | |
|---|---|---|---|---|
| Probe Nr. | Reingas | Aerosol | kondensationsfähiger Anteil | Restgehalt |
| 1 | 458 | 25 | - | - |
| 2 | 6o | 4 | - | - |
| 3 | 28 | 1 | - | - |
| 4 | 695 | 14 | 5o8 | - |
| 5 | 196 | 6 | 364 | - |
| 6 | 96 | 5 | 62 | - |
| 7 | 117 | 4 | 122 | - |
| 8 | 35 | 4 | 43 | - |
| 9 | 98 | 6 | 5o | - |
| 1o | 234 | 6 | 68 | - |
| 11 | 59 | 6 | 18 | - |
| 12 | 19o | 16 | 51 | - |
| 13 | 145 | 6 | 59 | - |
| 14 | 9 | 4 | 88 | - |
| 15 | 347 | 8 | 1.239 | - |
| 16 | 227 | 23 | 158 | - |
| 17 | 2o4 | 28 | 149 | - |
| 18 | 148 | 16 | 1.612 | - |
| 19 | 22 | 8 | 132 | - |
| 2o | 147 | 9 | 47 | - |
| 21 | 2o3 | 14 | 1o4 | 54 |
| 22 | 116 | 15 | 134 | 34 |
| 23 | 66 | 31 | 66 | 9 |
| 24 | 46 | 17 | 22 | 5 |
| 25 | 49 | 18 | 21 | 5 |
| 26 | 35 | 1o | 14 | 4 |
| 27 | 137 | 3 | 5 | 14 |
| 28 | 91 | 14 | 30 | 8 |
| 29 | 421 | 3o | 28o | 97 |
| 3o | 308 | 15 | 75 | 32 |
| 31 | - | - | - | - |
| 32 | 187 | 76 | 72 | 25 |
| 33 | 245 | 47 | 99 | 2o |
| 34 | 254 | 32 | 92 | 22 |
| 35 | 196 | 28 | 76 | 26 |
| 36 | 176 | 14 | 68 | 25 |
| 37 | 98 | 486 | 15 | 63 |
| 38 | 193 | 2.6o9 | 26 | 78 |
| 39 | 111 | 266 | 13 | 66 |
| 4o | 75 | 12.14o | 8 | 4 |
| 41 | 1o7 | 973 | 6 | 45 |
| 42 | 72 | 118 | 11 | 35 |

Tabelle V

| Bleigehalt des Reingases des Aerosols sowie kondensationsfähiger Anteil des Reingases und Restgehalt (jeweils $\mu g/m^3$) | | | | |
|---|---|---|---|---|
| Probe Nr. | Reingas | Aerosol | kondensationsfähiger Anteil | Restgehalt |
| 1 | 214 | 23 | - | - |
| 2 | 294 | 9 | - | - |
| 3 | 469 | 8 | - | - |
| 4 | 1.o42 | 114 | 392 | - |
| 5 | 658 | 29 | 155 | - |
| 6 | 416 | 31 | 69 | - |
| 7 | 275 | 2 | 65 | - |
| 8 | 708 | 34 | 77 | - |
| 9 | 514 | 127 | 119 | - |
| 1o | 439 | 48 | 79 | - |
| 11 | 353 | 5o | 55 | - |
| 12 | 437 | 56 | 197 | - |
| 13 | 1.o12 | 38 | 677 | - |
| 14 | 172 | 2o | 365 | - |
| 15 | 347 | 16 | 273 | - |
| 16 | 383 | 19 | 202 | - |
| 17 | 259 | 14 | 176 | - |
| 18 | 24o | 16 | 249 | - |
| 19 | 91 | 13 | 157 | - |
| 2o | 344 | 19 | 4o3 | - |
| 21 | 273 | 9 | 93 | 147 |
| 22 | 69 | 6 | 15 | 11 |
| 23 | 233 | 35 | 2o9 | 157 |
| 24 | 316 | 33 | 5o | 338 |
| 25 | 181 | 187 | 19 | 73 |
| 26 | 313 | 29 | 38 | 222 |
| 27 | 2o8 | 21 | 73 | 69 |
| 28 | 91 | 5o | 41 | 68 |
| 29 | 198 | 37 | 68 | 1o2 |
| 3o | 841 | 61 | 1o8 | 855 |
| 31 | - | - | - | - |
| 32 | 1o6 | 17 | 68 | 51 |
| 33 | 1o4 | 6 | 28 | 57 |
| 34 | 52 | 6 | 13 | 27 |
| 35 | 56 | 4 | 16 | 16 |
| 36 | 45 | 5 | 16 | 15 |
| 37 | 79 | 1.834 | 17 | 53 |
| 38 | 177 | 2.2o3 | 4o | 74 |
| 39 | 91 | 1.373 | 9 | 59 |
| 4o | 153 | 592 | 8 | 89 |
| 41 | 334 | 546 | 14 | 286 |
| 42 | 112 | 594 | 9 | 48 |

Tabelle VI

| Kupfer- und Nickelgehalt des Reingases, Aerosols sowie kondensationsfähiger Anteil des Reingases und Restgehalt (jeweils $\mu g/m^3$) | | | | | |
|---|---|---|---|---|---|
| Probe Nr. | Reingas | | Aerosol | | kondens.fähiger Anteil |
| | Cu | Ni | Cu | Ni | Cu | Ni |
| 1 | 115 | 292 | 5 | 3 | - | - |
| 2 | 68 | 76 | 2 | 3 | - | - |
| 3 | 111 | 69 | 1 | 1 | - | - |
| 4 | 139 | 1o4 | 1o | 9 | 7o | 69 |
| 5 | 89 | 89 | 4 | 5 | 29 | 32 |
| 6 | 72 | 88 | 4 | 4 | 11 | 2o |
| 7 | 42 | 133 | 4 | 5 | 13 | 22 |
| 8 | 14o | 1o5 | 5 | 5 | 17 | 13 |
| 9 | 44 | 133 | 389 | 239 | 17 | 23 |
| 1o | 63 | 91 | 51 | 27 | 11 | 12 |
| 11 | 39 | 65 | 32 | 17 | 8 | 14 |
| 12 | 7o | 7o | 11 | 56 | 33 | 23 |
| 13 | 233 | 76 | 7 | 4 | 129 | 18 |
| 14 | 23 | 46 | 4 | 2 | 63 | 15 |
| 15 | 87 | 58 | 5 | 3 | 7o | 26 |
| 16 | 9o | 78 | 18 | 3 | 75 | 24 |
| 17 | 87 | 68 | 9 | 3 | 72 | 2o |
| 18 | 65 | 34 | 6 | 3 | 1o7 | 31 |
| 19 | 18 | 58 | 4 | 3 | 46 | 22 |
| 2o | 71 | 56 | 5 | 4 | 64 | 16 |
| 21 | 32 | 64 | 3 | 1 | 38 | 1o |
| 22 | 23 | 46 | 4 | - | 5 | 4 |
| 23 | 33 | 67 | 13 | 6 | 139 | 3o |
| 24 | 52 | 57 | 6 | 2 | 1o | 9 |
| 25 | 25 | 49 | 4 | 3 | 6 | 12 |
| 26 | 25 | 90 | 3 | 3 | 5 | 11 |
| 27 | 42 | 59 | 4 | 13 | 18 | 9 |
| 28 | 5o | 46 | 11 | 11 | 13 | 16 |
| 29 | 54 | 90 | 9 | 25 | 37 | 14 |
| 3o | 152 | 42 | 11 | 7 | 22 | 14 |
| 31 | - | - | - | - | - | - |
| 32 | 25 | 51 | 4 | 13 | 11 | 18 |
| 33 | 24 | 47 | 2 | 7 | 7 | 15 |
| 34 | 26 | 52 | 1 | 4 | 6 | 13 |
| 35 | 28 | 67 | 2 | 3 | 6 | 12 |
| 36 | 15 | 29 | 1 | 2 | 7 | 15 |
| 37 | 19 | 32 | 7.23o | 1o.898 | 4 | 16 |
| 38 | 41 | 41 | 21.193 | 5.oo6 | 46 | 19 |
| 39 | 2o | 4o | 3.735 | 8.95o | 4 | 4 |
| 4o | 34 | 37 | 26.6o1 | 6.427 | 2 | 3 |
| 41 | 78 | 41 | 2.o91 | 1.321 | 8 | 6 |
| 42 | 26 | 51 | 71o | 1.798 | 3 | 3 |

Tabelle VII: Schwermetallgehalte des Reingases, Aerosols sowie kondensationsfähiger Anteil des Reingases und Restgehalt (jeweils $\mu g/m^3$)

| Schwermetall | Schwermetallgehalte d. untersuchten Reingases | | | Reingas-Restgehalt nach Kondensation | abscheidbarer Anteil | Rohgas | 2) |
|---|---|---|---|---|---|---|---|
| | Reingas ohne Kondensation - 1 - | Aerosol - 2 - | kondens. fähiger Anteil - 3 - | - 4 - | Summe 2 + 3 - 5 - | Summe 1+2 -6- | A % ca. |
| Quecksilber | 167 | (16)*[1] | 187 | 25 | 2o3 | 183 | 86 |
| Blei | 333 | (34)*[1] | 143 | 147 | 177 | 367 | 60 |
| Kupfer | 65 | (19)*[1] | 36 | 19 | 55 | 84 | 77 |
| Nickel | 76 | (15)*[1] | 19 | 19 | 4 | 91 | 80 |

*[1] Die Werte dürften höher sein, da sich in der Kolonne Schwermetallsalze aus verdampftem Aerosol abgeschieden haben.

*[2] abscheidbare Schwermetallanteile aus dem Rohgas (Sp. -6-), errechnet gemäß

$$A\ (\%) = 100 - \frac{\text{Spalte 4}}{\text{Spalte 6}} \cdot 100\ (\%)$$

EP 0 208 156 B2

Tabelle VIII

| Schwermetallgehalte des Reingases, Aerosols sowie kondensationsfähige Schwermetalle, kondensationsfähige Schwermetalle nach der Kolonne und Restgehalt (Sonderversuche ohne Kolonnenbeheizung), jeweils $\mu g/m^3$ | | | | |
|---|---|---|---|---|
| Schwermetall | **Schwermetallgehalted.** untersuchten Abgases | | | Restgehalt |
| | Reingas | Aerosol + kondensationsfähige Schwermetalle | Kondensationsfähige Schwermetalle nach der Kolonne | |
| Quecksilber | 13o | 14 bis 2.6o9 | 27 | 54 |
| Blei | 1o1 | 5 bis 2.2o3 | 18 | 5o |
| Kupfer | 24 | 1 bis 21.193 | 13 | 13 |
| Nickel | 39 | 1.798 bis 1o.898 | 11 | 18 |
| bei zusätzlicher Spülung der Kolonne | | | | |
| Quecksilber | 72 u. 1o7 | 973 u. 12.14o | 8 u. 6 | 4 u. 45 |
| Blei | 153 u. 334 | 546 u. 592 | 8 u. 14 | 89 u. 286 |
| Kupfer | 34 u. 78 | 2.o91 u. 26.6o1 | 2 u. 8 | 16 u. 136 |
| Nickel | 37 u. 41 | 1.321 u. 6.427 | 3 u. 6 | 19 u. 74 |

Beispiel 2

In einer Versuchsanlage gemäß Fig. 4 wurde die Wirkungsweise des erfindungsgemäßen Verfahrens anhand der Quecksilbermessungen getestet und bewertet. Die Ergebnisse sind in nachfolgender Tab. IX zusammengefaßt, wobei die in Fig. 4 angedeuteten Meßstellen bzw. Meßstrecken durch Hinzusetzen der entsprechenden A, B, C etc.-Kodierungen zugeordnet werden. Die T-Absenkung setzt sich zusammen aus dem $\Delta T$ im Kühler (B) und dem $\Delta T$ auf dem Weg zwischen Kühleraustritt und E-Filtereintritt. Gemessen wurde die Hg-Massenstromkonzentration im Rohgas (A), die Hg-Menge nach dem Kühler und vor Eintritt in das E-Filter (Meßstelle D) sowie die Menge im Reingas nach dem E-Filter (H). Neben den Gasmessungen erfolgten Quecksilbermessungen in den Kondensaten des Kühlers (F) und des E-Filters (G). Die Bedeutung einer hinreichenden T-Absenkung wird nahand der Abscheidungs- bzw. Kondensationsgrade eindrucksvoll durch die Datenübersicht demonstriert.

Tabelle IX: Kondensationswirkung des erfindungsgemäßen Verfahrens
anhand der Quecksilberkonzentrationen, ermittelt und
durchgeführt mit Vorrichtung gemäß Fig. 6

| Versuch Nr. / Meß-punkt | Menge Hg/h im Rohgas [A] | | | ΔT im Kühlerbereich, aus Gastemperatur vor u. nach dem Kühler (°C) [B] | ΔT-Strecke zw. Kühleraustritt u. E-Filtereintritt (°C) [C] | ΔT. Summe aus 3 + 4, zw. Kühlereintritt u. E-Filtereintritt (°C) | Menge Hg/h im Gas nach dem Kühler [D] | | | Eindüsen von Wasser bei [E] | Zusatzwasser | |
|---|---|---|---|---|---|---|---|---|---|---|---|---|
| | mg/h | % | T(°C) | | | | mg/h | %↓ | %↑ | *1) | l/h | l/100Nm³ Gas |
| 2 | 16,4 | 100 | 68 | 26 | 3 | 29 | 7,4 | 54,9 | 45,1 | 0,86 | - | - |
| 3 | 19,8 | 100 | 68 | 27 | 3 | 3o | 8,8 | 55,6 | 44,4 | 1,07 | - | - |
| 5 | 34,7 | 100 | 68 | 27 | 4 | 31 | 16,8 | 51,6 | 48,4 | 1,15 | - | - |
| 6 | 27,9 | 100 | 65 | 27 | 3 | 3o | 26,6 | 4,7 | 95,3 | 1,01 | - | - |
| 7 | 89,1 | 100 | 65 | 27 | 3 | 3o | 52,7 | 40,9 | 59,1 | 1,01 | - | - |
| 8 | 12,4 | 100 | 64/59 | 5 | 2 | 7 | 14,6 | x | 118,0 | 0,02 | - | - |
| 9 | 14,9 | 100 | 64/59 | 5 | 3 | 8 | 12,5 | 16,1 | 83,9 | 0,025 | - | - |
| 1o | 21,2 | 100 | 66/60 | 6 | 2 | 8 | 23,6 | x | 111,3 | 0,02 | - | - |
| 11 | 6,3 | 100 | 65/60 | 5 | 2 | 7 | 7,0 | x | 111,1 | 0,03 | - | - |
| 12 | 9,0 | 100 | 65/6o | 5 | 2 | 7 | 6,6 | 26,7 | 73,3 | 0,022 | - | - |
| 13 | 2o,5 | 100 | 66/61 | 5 | 4 | 9 | 19,6 | 4,4 | 95,6 | 0,055 | 29 | 27 |
| 14 | 6,1 | 100 | 67/62 | 5 | 4 | 9 | 6,75 | x | 110,7 | 0,054 | 29 | 23 |
| 15 | 9,9 | 100 | 6o/57 | 8 | 5 | 13 | 7,4 | 25,3 | 74,7 | 0,24 | 4o | 31 |
| 16 | 39,6 | 100 | 65/56 | 9 | 4 | 13 | 39,1 | 11,4 | 88,6 | 0,25 | 3o | 24,2 |
| 17 | 25,7 | 100 | 67/58 | 9 | 5 | 14 | 23,8 | 7,4 | 92,6 | 0,26 | 37 | 28,9 |
| 18 | 48,8 | 100 | 65/56 | 9 | 6 | 15 | 23,0 | 52,9 | 47,1 | 0,41 | 36 | 27,3 |
| 19 | 15,o | 100 | 67/57 | 1o | 5 | 15 | 12,5 | 16,7 | 83,3 | 0,34 | 37 | 28,7 |
| 2o | 12,6 | 100 | 67/58 | 9 | 5 | 14 | 14,1 | x | 112,0 | 0,33 | 25 | 19,3 |
| 21 | 31,4 | 100 | 62/53 | 9 | 5 | 14 | 28,2 | 10,2 | 89,8 | 0,29 | 25 | 18,3 |
| 22 | 7o,o | 100 | 62/42 | 2o | 6 | 26 | 48,6 | 30,6 | 69,4 | 0,62 | 41 | 29,3 |
| 23 | 12,6 | 100 | 64/43 | 21 | 7 | 27 | 14,9 | x | 118,2 | 0,56 | 39 | 3o,7 |
| 24 | 32,0 | 100 | 65/53 | 12 | 4 | 16 | 28,7 | 10,3 | 89,7 | 0,67 | 38 | - |
| 25 | 23,0 | 100 | 66/53 | 13 | 4 | 17 | 15,7 | 31,7 | 68,3 | 0,7o | 37 | - |
| 26 | 9,7 | 100 | 64/49 | 15 | 2 | 17 | 1o,8 | x | 111,3 | 0,3o | x | - |
| 27 | 9,0 | 100 | 64/48 | 16 | 6 | 22 | 7,9 | 12,2 | 87,8 | 0,33 | 43 | - |
| 28 | 74,7 | 100 | 62/47 | 15 | 6 | 21 | 22,4 | 70,0 | 3o,0 | 0,33 | 43 | - |
| 29 | 23,o | 100 | 67/51 | 16 | 4 | 2o | 19,8 | 13,9 | 86,1 | 0,41 | 21 | - |

Tabelle IX: Kondensationswirkung des erfindungsgemäßen Verfahrens anhand der Quecksilberkonzentrationen, ermittelt und durchgeführt mit Vorrichtung gemäß Fig. 6

| Versuch Nr. / Meßpunkt | Menge Hg/h im Rohgas [A] | | | ΔT im Kühlerbereich, aus Gastemperatur vor u. nach dem Kühler(°C) [B] | ΔT-Strecke zw. Kühleraustritt u. E-Filtereintritt (°C) [C] | ΔT, Summe aus 3+4, zw. Kühlereintritt u. E-Filtereintritt (°C) | Menge Hg/h im Gas nach dem Kühler [D] | | | Eindüsen von Wasser bei [E] Zusatzwasser | | |
|---|---|---|---|---|---|---|---|---|---|---|---|---|
| | mg/h | % | T(°C) | | | | mg/h | %↓ | %↑ | *1) | l/h | l/100Nm³ Gas |
| 30 | 93,9 | 100 | 67/52 | 15 | 4 | 19 | 59,6 | 36,5 | 63,5 | 0,40 | 23 | - |
| 31 | 23,9 | 100 | 63/52 | 11 | 5 | 16 | 12,7 | 46,9 | 53,1 | 0,21 | 25 | - |
| 32 | 58,8 | 100 | 65/53 | 12 | 5 | 17 | 73,2 | x | 124,5 | 0,24 | 25 | - |
| 33 | 94,1 | 100 | 63/43 | 20 | 5 | 25 | 25,2 | 73,2 | 26,8 | 0,67 | 25 | - |

*1) Kühlwasserverbrauch (m³/h)

zu Tab. IX: geschätzte Wassermenge (da Wasseruhr defekt)

| Messung Nr. | Rohgas-Wasseranteil (mg/Nm³) | Reingas-Wasseranteil nach E-Filter (mg/Nm³) | Abscheidegrad (%) | ΔT(°C) |
|---|---|---|---|---|
| a | 81,82 | 3,18 | 96,11 | 33 |
| b | 17,7 | 0,9 | 94,9 | 34 |
| c | 1o,1 | 0,57 | 94,3 | 34 |
| d | 153,3 | 6,4 | 95,8 | 32 |

ΔT setzt sich zusammen aus T-Absenkung im Kühler (ΔT ca. 15°C), zusätzlich wurden jedoch 3o l/h Wasser eingespritzt vor dem E-Filter, so daß das Gesamt-ΔT ca. 3o°C beträgt.

EP 0 208 156 B2

EP 0 208 156 B2

**Tabelle IX : Fortsetzg.**

| Versuch Nr. / Meßpunkt | Menge Hg/h im Reingas nach E-Filter [H] mg/h | %↓ | Menge Hg/h in den Kondensaten — d. Kühlers [F] mg/h | %↓ | d. E-Filters [G] mg/h | %↓ | Bemerkungen |
|---|---|---|---|---|---|---|---|
| 2 | 5,7 | 65,85 | 2,2 | 34,75 | 2,8 | 2,0 | 30°C-Absenkung ohne Zusatz-wasser |
| 3 | 3,0 | 84,80 | 2,2 | 15,20 | 0,0 | 4,1 | " " " |
| 5 | 9,4 | 72,95 | 3,2 | 27,05 | 0,5 | 1,4 | 5°C-Absenkung ohne Zusatz-wasser |
| 6 | 14,8 | 46,34 | 4,2 | 53,66 | 1,2 | 4,2 | " " " |
| 7 | 29,1 | 67,34 | 18,4 | 32,66 | 3,7 | 3,2 | |
| 8 | 7,6 | 38,7 | 5,2 | 61,3 | 0,0 | 5,4 | |
| 9 | 10,4 | 30,2 | 9,3 | 69,2 | 2,0 | 13,7 | 5°C Absenkung + Zusatz an Salzwasser |
| 10 | 36,3 | x | 8,9 | 71,9 | 0,4 | 12,2 | 10°C Absenkung + Zusatz an Salzwasser |
| 11 | 11,4 | x | 3,7 | 80,9 | 5,3 | 160,0 | Zusatz von 10g/h Ozon, 10°C Temperaturabsenkung im Kühler |
| 12 | 7,5 | 12,7 | 7,7 | 87,3 | 5,1 | 26,8 | Eispritzen v. Wasser " |
| 13 | 9,6 | 53,7 | 14,7 | 46,5 | 3,9 | 59,0 | |
| 14 | 6,0 | 24,6 | 12,2 | 75,7 | 1,9 | 19,2 | 10°C T-Absenkung, Eindüsen v. Säure vor Filter " |
| 15 | 5,1 | 49,5 | 18,7 | 50,3 | 7,7 | 22,7 | vorsch. T-Absenkungen im Kühler u. Eindüsen v. kaltem Wasser, |
| 16 | 18,2 | 54,7 | 6,9 | 45,7 | 7,4 | 40,5 | " " " |
| 17 | 14,4 | 44,2 | 11,8 | 55,3 | 4,5 | 14,3 | |
| 18 | 16,5 | 66,8 | 8,2 | 33,4 | 5,4 | 46,7 | |
| 19 | 6,7 | 55,0 | 12,3 | 44,7 | 4,4 | 31,7 *2 | |
| 20 | 9,2 | 27,6 | 10,2 | 73,0 | 11,0 | 14,3 | |
| 21 | 8,6 | 72,0 | 12,2 | 27,4 | 5,2 | 8,0 | |
| 22 | 26,2 | 64,7 | 11,8 | 36,0 | 2,1 | 39,4 | |
| 23 | 4,7 | 62,7 | 10,7 | 37,3 | 9,6 | 14,4 | |
| 24 | 13,2 | 58,7 | 12,3 | 41,3 | 3,6 | 50,4 | |
| 25 | 8,8 | 61,0 | 10,2 | 38,3 | 1,1 | 2,1 | |
| 26 | 6,9 | 32,6 | 12,3 | 68,0 | 5,5 | 60,8 | |
| 27 | 3,7 | 56,3 | 11,3 | 43,7 | 2,1 | 2,6 | |
| 28 | 14,7 | 80,8 | 10,2 | 19,2 | 1,9 | 6,1 | |
| 29 | 10,4 | 54,0 | 17,3 | 45,3 | 3,6 | 10,2 | |
| 30 | 40,4 | 57,2 | 27,1 | 43,4 | 6,1 | 15,1 | |
| 31 | 10,0 | 58,0 | | 41,5 | | 10,9 | |
| 32 | 26,5 | 55,0 | | 45,0 | | 2,0 | |
| 33 | 18,8 | 80,0 | | 20,0 | | | |

*2 bei Versuch Nr. 19 Zusatz von 20 g/h Ozon

## Patentansprüche

1. Verfahren zur weitgehenden Restentfernung von gasförmigen, aerosolartigen und/oder staubförmigen Schadstoffen aus Abgasen von Müll- und Sondermüllverbrennungsanlagen, wobei das aus der Verbrennungszone der Anlage abströmende und Schadstoffe enthaltende heiße Rauchgas entstaubt und das entstaubte Rauchgas in einer Rauchgasnachbehandlung gemäß dem Naßverfahren, Halbtrockenverfahren oder Trockenverfahren behandelt wird und sich ein Wasserdampf enthaltendes Restwaschgas ergibt, wobei das wasserdampfhaltige Restwaschgas mit einer Temperatur T in einem Kondensationsapparat aus Glas, Graphit, korrosionsbeständigem Metall, Keramik oder Kunststoff durch indirekte Kühlung mittels eines Kühlmediums soweit abgekühlt wird, daß die Temperatur auf einen Wert T-x unter Wahl einer Temperaturdifferenz derart herabgesetzt wird, daß mehr als 50% des im Gas enthaltenen Wasserdampfes im Kondensationsapparat auskondensiert, wobei sich zusammen mit dem kondensierten Wasserdampf Feinstäube und Aerosole, die als Kondensationskeime wirken, abscheiden und Schadgase an der Oberfläche der gebildeten Nebel (Wassertropfen) absorbiert und somit mit dem Kondensat ausgeschieden werden, und wobei das abgeschiedene Kondensat abgezogen sowie chemisch-physikalisch nachbehandelt wird.

2.  Verfahren nach Anspruch 1, **dadurch gekennzeichnet,** daß die indirekte Kühlung des Restwaschgases hinter Wäschern vorgenommen wird.

3.  Verfahren nach einem der Ansprüche 1 bis 2, dadurch gekennzeichnet, daß dem Kondensationsapparat zusätzlich ein Mittel zudosiert wird, das mit Schadstoffkomponenten des Restwaschgases reagiert und diese zu Verbindungen mit herabgesetzter Flüchtigkeit und/oder Löslichkeit umsetzt bzw. deren Alkalität verändert.

4.  Verfahren nach einem der Ansprüche 1 bis 3, dadurch gekennzeichnet, daß dem Kondensationsapparat zusätzlich ein Mittel zudosiert wird, das Schadstoffkomponenten adsorptiv oder absorptiv chemischphysikalisch bindet.

5.  Verfahren nach Anspruch 4, dadurch gekennzeichnet, daß das zudosierte Mittel ein Molekularsieb ist, wie Ton, chemisch modifizierter Ton, Tonerde, chemisch modifizierte Tonerde, Kieselgel, Kieselsäure, Zeolithe und Aktivkohle.

6.  Verfahren nach einem der Ansprüche 1 bis 5, dadurch gekennzeichnet, daß das Restwaschgas zusätzlich mit einem Kondensationshilfsmittel beaufschlagt wird, das die Bildung von Kondensationskeimen fördert.

7.  Verfahren nach Anspruch 5, dadurch gekennzeichnet, daß als Kondensationshilfsmittel übersättigter Wasserdampf eingesetzt wird.

8.  Verfahren nach einem der Ansprüche 1 bis 7, dadurch gekennzeichnet, daß die Temperaturdifferenz x mindestens 15°C beträgt.

9.  Verfahren nach Anspruche 8, dadurch gekennzeichnet, daß die Temperaturdifferenz x mindestens 30°C beträgt.

10. Verfahren nach Anspruch 8, dadurch gekennzeichnet, daß die Temperaturdifferenz x mindestens 50°C beträgt.

11. Verfahren nach einem der Ansprüche 1 bis 10, dadurch gekennzeichnet, daß das Gas im Kondensationsapparat auf mindestens 50°C abgekühlt wird.

12. Verfahren nach Anspruch 11, dadurch gekennzeichnet, daß das Gas im Kondensationsapparat auf mindestens 30°C abgekühlt wird.

13. Verfahren nach Anspruch 11, dadurch gekennzeichnet, daß das Gas im Kondensationsapparat auf mindestens 20°C abgekühlt wird.

14. Verfahren nach Anspruch 1, dadurch gekennzeichnet, daß die Temperaturdifferenz x so eingestellt wird, daß das Restwaschgas mindestens auf die Außen- bzw. Kaminumgebungstemperatur der Verbrennungsanlage abgekühlt wird.

15. Verfahren nach einem der Ansprüche 1 bis 14, dadurch gekennzeichnet, daß Restwaschgase behandelt werden, die quecksilberhaltige, bleihaltige, cadmiumhaltige, chromhaltige und/oder nickelhaltige Schadstoffe in staubund/oder gasförmiger Form enthalten.

16. Verfahren nach einem der Ansprüche 1 bis 15, dadurch gekennzeichnet, daß das im Kondensationsapparat gebildete Kondensat durch Neutralisieren und/oder Fällen und Abtrennen der Fällungsprodukte behandelt und die gereinigten Lösungen, insbesondere die Salzlösungen (Sole) wiederverwendet werden.

17. Verfahren nach einem der Ansprüche 1 bis 16, dadurch gekennzeichnet, daß das im Kondensationsapparat gebildete Kondensat, gegebenenfalls nach chemisch-physikalischer Behandlung, dem Naßwäscherkreislauf zugeleitet wird, wobei die auskondensierten flüchtigen Komponenten wie Quecksilber oder Säure durch Fällen oder Neutralisieren umgewandelt werden und somit nicht in der flüchtigen Form in den Naßwäscherkreislauf zurückgegeben werden, aus dem sie ausgestrippt werden.

18. Verfahren nach einem der Ansprüche 1 bis 17, dadurch gekennzeichnet, daß das aus dem Kondensationsapparat mit einer Temperatur von höchstens T-x austretende Restgas vor Abgabe an die Atmosphäre an einem Elektroabscheider vorbeigeführt wird, um den Restgehalt an Schadstoffen noch weiter abzusenken.

19. Verfahren nach einem der Ansprüche 1 bis 18, dadurch gekennzeichnet, daß im Rauchgas und oder Restwaschgas mindestens eine Schadstoffkomponente kontinuierlich als Indikator hinsichtlich ihrer Konzentration messend verfolgt wird, um den Verbrennungs- und Abgasreinigungsprozeß zu kontrollieren und zu steuern.

20. Verfahren nach einem der Ansprüche 1 bis 19, dadurch gekennzeichnet, daß hinter dem Kondensationskühler ein Elektrofilter angeordnet ist und die Kondensationskühlung in der Weise erfolgt, daß auch auf der Strecke bis zum Elektrofilter Kondendationskühlung stattfindet.

21. Verfahren nach Anspruch 19 oder 20, dadurch gekennzeichnet, daß die Konzentration eines Halogenids als Schadstoffkomponente gemessen wird.

22. Verfahren nach Anspruch 21, dadurch gekennzeichnet, daß das Halogenid das Fluorid ist.

23. Verfahren nach einem der Ansprüche 19 bis 22, dadurch gekennzeichnet, daß die Konzentration vor der Naßwäsche, gegebenenfalls vor der Abkühlung unter Kondensation, nach der Kondensationskühlung und gegebenenfalls vor und nach Passieren des Elektrofilters gemessen und das Verfahren über Differenzmessung und Adjustieren auf einen Schwellwert automatisiert wird.

24. Anlage zur Durchführung des Verfahrens nach einem der Ansprüche 1 bis 23, mit hintereinander geschalteter Verbrennungsanlage (1), hintereinander geschalteter Entstaubungseinrichtung (12) und hintereinander geschalteter Naßwäsche (3), gekennzeichnet durch einen Kondensationsapparat (13, 413, 613), der hinter die Naßwäsche (3, 503, 603) geschaltet ist, mit einer Einrichtung zur indirekten Kühlung des Restwaschgases, mit einer Einrichtung zur Rückführung des Kondensats in die Naßwäsche und mit einer Einrichtung zur Messung der Konzentration einzelner Schadstoffkomponenten und einer Vorrichtung zum Nachbehandeln des Kondensats mit einer Eindampfanlage, in der neutralisiertes Kondensat eingeengt werden kann und die aus einem korrosionsbeständigen Material wie Kunststoff, Glas, Keramik und/oder Graphit besteht.

25. Anlage zur Durchführung des Verfahrens nach einem der Ansprüche 19 bis 23, mit hintereinander geschalteter Verbrennungsanlage (1), Entstaubungseinrichtung (12) und hintereinander geschalteter Naßwäsche (3), gekennzeichnet durch einen Kondensationskühler (413), der hinter die Naßwäsche geschaltet ist, mit einer Einrichtung zur indirekten Kühlung des Restwaschgases, und ein Elektrofilter (412), zu dem Kondensat gelangt, mit einer Einrichtung zur Rückführung des Kondensats in die Naßwäsche und mit einer Einrichtung zur Messung der Konzentration einzelner Schadstoffkomponenten.

## Claims

1. A method of substantially removing residues of gaseous, aerosol-like and/or dust-form pollutants from waste gases from refuse and special refuse incineration plants, the hot flue gas emanating form the combustion zone of the plant and containing pollutants being cleansed of dust and the dust-free flue gas being treated in a flue gas post-treatment by the wet method, semi-dry method or dry method and producing a steam-containing residual washing gas, wherein the steam-containing residual washing gas having a temperatur T is cooled by indirect colling using a cooling medium in condensation apparatus made of glass, graphite, corrosion-resistant metal, ceramic or synthetic plastics material to the extent that the temperature is reduced to a value T-x, the temperature difference being so chosen that more than 50% of the steam contained in the gas condenses out in the condensation apparatus, with solid dusts and aerosols acting as condensation nuclei being separated together with the condensing steam and gaseous pollutants being absorbed at the surface of the mists (water drops) so formed and being thus separated together with the condensate, and in wherein the separated condensate is withdrawn and subjected to chemico-physical post-treatment.

2. The method of claim 1, characterized by effecting the cooling of the the residual washing gas behind washer-scrubbers.

3. The method according to one of claims 1 and 2, characterized in that there is additionally added to the condensation apparatus an agent which reacts with pollutant components in the residual washing gas, altering their alkalinity or converting them to compounds of reduced volatility and/or solubility.

4. The method according to one of claims 1 to 3, characterized in that there is additionally added to the condensation apparatus an agent which adsorbtively or absorbtively chemically-physically bonds the pollutive components.

5. The method according to claim 4, characterized in that the added agent is a molecular screen such as clay, chemically modified clay, alumina, chemically modified alumina, silica gel, silicic acid, zeoliths and activated charcoal.

6. The method according to one of claims 1 to 5, characterized in that the residual washing gas is additionally exposed to a condensation aid which promotes the formation of condensation nuclei.

7. The method according to claim 5, characterized in that supersaturated steam is used as the condensation aid.

8. The method according to one of claims 1 to 7, characterized in that the temperature difference x amounts to at least 15°C.

9. The method according to claim 8, characterized in that the temperature difference x amounts to at least 30°C.

10. The method according to claim 8, characterized in that the temperature difference x amounts to at least 50°C.

11. The method according to one of claims 1 to 10, characterized in that the gas in the condensation apparatus is cooled to at least 50°C.

12. The method according to claim 11, characterized in that the gas in the condensation apparatus is cooled to at least 30°C.

13. The method according to claim 11, characterized in that the gas in the condensation apparatus is cooled to at least 20°C.

14. The method according to claim 1, characterized in that the temperature difference x is so adjusted that the residual washing gas is cooled at least to the outside or chimney environment temperature of the incineration plant.

15. The method according to one of claims 1 to 14, characterized in that residual washing gases are treated which contain mercury, lead, cadmium, chromium and/or nickel-bearing pollutants in the form of dust and/or gases.

16. The method according to one of claims 1 to 15, characterized in that the condensate formed in the condensation apparatus is treated by neutralisation and/or precipitation and separation of the products of precipitation, the cleansed solutions, particularly the salt solutions (brine) being reused.

17. The method according to one of claims 1 to 16, characterized in that the condensate formed in the condensation apparatus is added to the wet washer circuit possibly after a chemical-physical treatment, the condensed volatile components like mercury or acids being converted by precipitation or neutralisation and thus, being not reintroduced in their volatile form into the wet washer circuit from which they are stripped out.

18. The method according to one of claims 1 to 17, characterized in that the residual gas emerging from the condensation apparaturs at a temperature of not more than T-x is passed over an electro-separator prior to being emitted into the atmosphere, in order to reduce still further the residual content of harmful pollutants.

19. The method according to one of claims 1 to 18, characterized in that in the flue gas and/or residual washing gas at least one pollutant component is continuously tracked as an indicator and measured in regard to its concentration in order to monitor and control the incineration and waste gas cleansing processes.

20. The process according to one of claims 1 to 19, characterized in that an electrofilter is arranged behind the condensation cooler and in that the condensation cooling is carried out in such a manner that there is also a condensation cooling on the way to the electrofilter.

21. The method according to claim 19 or 20, characterized in that the concentration of a halide is measured as a pollutant component.

22. The method according to claim 21, characterized in that the halide is fluoride.

**23.** The method according to one of claim 19 to 22, characterized in that the concentration is measured prior to the wet wash, possibly prior to cooling under condensation, after the condensation cooling and possibly before and after passing through the electrofilter, the process being automated via differential measurement and adjustment to a threshold value.

**24.** A plant for carrying out the method according to one of claims 1 to 23, having in an arrangement one after another an incineration plant (1), a dust removal plant (12) and a wet washing plant (3), characterized by a condensation apparatus (13, 413, 613) being arranged behind the wet washing stage (3, 503, 603) with means for the indirect cooling of the residual washing gas, with means for recycling the condensate to the wet washing stage and with means for measuring the concentration of individual pollutant components and an apparatus for secondary treating the condensate with an evaporation plant wherein the neutralised condensate can be concentrated and which is made of a corrosion-resistant material like a synthetic plastics material, glass, ceramic and/or graphite.

**25.** A plant for carrying out the method according to one of claims 19 to 23 having in an arrangement one after another an incineration plant (1), a dust removal plant (12) and a wet washing plant (3), characterized by a condensation cooler (413), which is arranged behind the wet washing stage, with means for direct or indirect cooling of the residual washing gas, and by an electrofilter (412) to which condensate comes with means for recycling the condensate to the wet washing stage and with means for measuring the concentration of individual pollutant components.

## Revendications

**1.** Procédé d'élimination résiduelle poussée de substances nuisibles se présentant sous forme gazeuse, d'aérosols et/ou pulvérulente, à partir de gaz d'échappement d'installations de combustion d'ordures ou d'ordures spéciales, le gaz chaud évacué de la zone de combustion de l'installation et contenant des substances nuisibles étant dépoussièré et le gaz chaud dépoussiéré étant traité dans un retraitement de gaz de fumées, selon le procédé humide, le procédé semi-sec ou le procédé sec, avec production consécutive de gaz résiduel de lavage contenant de la vapeur d'eau, selon lequel on refroidit dans un appareil de condensation le gaz résiduel de lavage contenant de la vapeur d'eau et situé à une température T, de telle façon que la température soit abaissée à une valeur T-x, ladite différence de température étant choisie de telle façon que plus que 50% de la vapeur d'eau contenue dans le gaz soit séparée par condensation dans l'appareil de condensation, les poussières solides et les aérosols fonctionnant en germes de condensation étant précipités conjointement avec la vapeur d'eau condensant et les substances nuisibles gazeuses étant absorbées à la surface des brouillards formés (gouttes de l'eau) et étant séparées conjointement avec le condensat, et le condensat séparé étant extrait et retraité par voie chimico-physique.

**2.** Procédé selon la revendication 1, caractérisé en ce que le gaz résiduel de lavage après des laveurs est refroidi par refroidissement indirect au moyen d'un fluide de refroidissement dans un appareil en verre, en graphite, en un métal résistant à la corrosion, en céramique ou en matière plastique.

**3.** Procédé selon l'une des revendications 1 et 2, caractérisé en ce que l'on ajoute en plus par dosage, à l'appareil de condensation, un agent qui réagit aux composants des substances nuisibles du gaz résiduel de lavage et convertit ceux-ci en donnant des composés à plus faible volatilité et/ou solubilité, ou modifie leur alcalinité.

**4.** Procédé selon l'une des revendications 1 à 3, caractérisé en ce que l'on ajoute en plus par dosage à l'appareil de condensation un agent qui combine les composants des substances nuisibles par voie d'adsorption ou d'absorption de manière chimico-physique.

**5.** Procédé selon la revendication 4, caractérisé en ce que l'agent ajouté par dosage est un tamis moléculaire, tel que l'argile, l'argile modifiée chimiquement, l'alumine, l'alumine modifiée chimiquement, le gel de silice, l'acide silicique, les zéolithes et le charbon actif.

**6.** Procéde selon l'une des revendications 1 à 5, caractérisé en ce que le gaz résiduel de lavage est en plus sollicité par un agent auxiliaire de condensation, qui produit la formation de germes de condensation.

**7.** Procédé selon la revendication 5, caractérisé en ce que l'on introduit de la vapeur d'eau sursaturée comme agent auxiliaire de condensation.

**8.** Procédé selon l'une des revendications 1 à 7, caractérisé en ce que la différence de température x est d'au moins 15°C.

9. Procédé selon la revendication 8, caractérisé en ce que la différence de température x est d'au moins 30°C.

10. Procédé selon la revendication 8, caractérisé en ce que la différence de température x est d'au moins 50°C.

11. Procédé selon l'une des revendications 1 à 10, caractérisé en ce que le gaz est refroidi dans a'appareil de condensation à au mois 50°C.

12. Procédé selon la revendication 11, caractérisé en ce que le gaz est refroidi dans l'appareil de condensation à au mois 30°C.

13. Procédé selon la revendication 11, caractérisé en ce que le gaz est refroidi dans l'appareil de condensation à au mois 20°C.

14. Procédé selon la revendication 1, caractérisé en ce que la différence de température x est réglée de telle façon que le gaz résiduel de lavage est refroidi au moins à la température extérieure ou à la température de l'environnement de la cheminée de l'installation de combustion.

15. Procédé selon l'une des revendications 1 à 14, caractérisé en ce que l'on traite les gaz résiduels de lavage qui contiennent, sous forme pulvérulente et/ou gazeuse, les substances nuisibles à teneur en mercure, plomb, cadmium, chrome et/ou nickel.

16. Procédé selon l'une des revendications 1 à 15, caractérisé en ce que le condensat formé dans l'appareil de condensation est traité par neutralisation et/ou précipitation et séparation des produits de la précipitation, et les solutions nettoyées, en particulier les solutions salines (saumure) étant réutilisées.

17. Procédé selon l'une des revendications 1 à 16, caractérisé en ce que le condensat formé dans l'appareil de condensation est amené au circuit du laveur humide, le cas échéant après avoir été traité par voie chimico-physique les composants volatiles condensés comme le mercure ou les acides étant convertis par précipitation ou neutralisation et non-reintroduits en forme volatile au circuit du laveur humide duquel ils sont éliminés.

18. Procédé selon l'une des revendications 1 à 17, caractérisé en ce que le gaz résiduel sortant de l'appareil de condensation à une température d'au plus T-x est passé avant émission à l'atmosphere sur un séparateur électrique afin de diminuer encore la teneur résiduelle en substances nuisibles.

19. Procédé selon l'une des revendications 1 à 18, caractérisé en ce que, dans le gaz de fumée et ou le gaz résiduel de lavage, on effectue le suivi par mesure en continu d'au moins un composant des substances nuisibles, à titre d'indicateur de leur concentration, afin de contrôler et de commander le processus de combustion et de nettoyage des gaz d'échappement.

20. Procédé selon l'une des revendications 1 à 19, caractérisé en ce que l'électrofiltre es arrangé après l'appareil de condensation et que la condensation par refroidissement est effectuée de façon qu'il y a aussi un refroidissement sous condensation en allant à l'électrofiltre.

21. Procédé selon la revendication 19 ou 20, caractérisé en ce que la concentration d'un halogénure est mesuré à titre de composait des substances nuisibles.

22. Procédé selon la revendication 21, caractérisé en ce que l'halogénure est le fluorure.

23. Procédé selon l'une des revendications 19 à 22, caractérisé en ce que la concentration est mesurée avant lavage humide, le cas échéant avant refroidissement sous condensation, apres refroidissement de condensation et, le cas échéant, avant et apres le passage dans l'électrofiltre, et le procédé étant automatisé par l'intermédiaire de la mesure de la différence et de l'ajustement sur une valeur de seuil.

24. Installation pour la réalisation du procédé selon l'une des revendications 1 à 23 ayant arrangé l'un apres l'autre une installation de combustion (1), un dispositif dépoussiéreur (12) et un lavage humide (3), caractérisé par un appareil de condensation (13, 413, 613), qui est arrangé après le laveur humide (3, 503, 603), avec des moyens pour effectuer un refroidissement indirect du gaz résiduel de lavage, avec des moyens de récirculation du condensat dans le laveur humide et avec des moyens pour mesurer la concentration des composants individuels des substances nuisibles et un appareil pour retraitement du condensat avec un dispositif d'évaporisation dans lequel le condensat neutralisé peut être concentré et oui est en un matière résistant à la corrosion, par example en matière plastique, en verre, en céramique et ou en graphite.

25. Installation pour la réalisation du procédé selon l'une des revendications 19 à 23, ayant arrangé l'un après l'autre, une installation de combustion (1), un dispositif dépoussiéreur (12) et un lavage humide (3), caractérisé par un appareil de condensation (413), qui est arrangé après le lavage humide avec des moyens pour effectuer un refroidissement direct du indirect du gaz residuel ce lavage et par un électrofiltre (412) auquel le condensat est amené avec des moyens pour recircular le condensat au lavage humide et avec des moyens pour mesurer la concentration des composants individuels des substances nuisibles.

Abb. 1

Fig. 2

Abzug des Sedimat- schlammes

Abzug zur Rauchgas- waschwasser- behandlung

Konden- sat

EP 0 208 156 B2

FIG. 3

WASSER

[E]

Δ T [C]

[D]-⊖

4 12

[A]

▶⊖  4.13

4 21

[B]

[F]

[G]

⊖ [H]

408

FIG. 4

ZUSATZ V. ALKALISCHEN
FESTSTOFF. ODER SUSPEN-
SION.

ENTSTAUBUNG

VERBRENNUNGS-
ANLAGE, AUCH MIT
WÄRMENUTZUNG

REAKTIONS-
ZONE

| 511 |

REAKTIONS-
PRODUKT

| 512 |

VERBR.
MATERIAL

| 501 |

ABGAS

ABGAS MIT WASSERGEHALT
AEROSOLEN RESTSTAUB
RESTGASEN

SCHLACKE

ENTSTAUBUNG

NÄSSWASCHE

| 512a |

| 503 |

FLUGASCHE-
-STAUB RUSS

RAUCHGAS-
WASCHWASSER

FIG. 5

VORRICHTUNG MIT BEHEIZBARER FÜLLKORPERKOLONNE UND KÜHLER

SPULÜNG

FIG. 6